# EUROPEAN PATENT SPECIFICATION

(11) **EP 3 562 662 B1**
(45) Date of publication and mention of the grant of the patent: **13.04.2022**
(21) Application number: 17847728.7
(22) Date of filing: 28.12.2017
(51) Int. Cl.: B29D 30/60, B60C 1/00, B60C 19/08, B29D 30/52, B60C 11/00

(54) **PROCESS FOR THE PRODUCTION OF AN ANTISTATIC TYRE FOR VEHICLE WHEELS AND ANTISTATIC TYRE THUS OBTAINED**
VERFAHREN ZUR HERSTELLUNG EINES ANTISTATISCHEN REIFENS FÜR FAHRZEUGRÄDER UND SO ERHALTENER ANTISTATISCHER REIFEN
PROCÉDÉ DE FABRICATION D'UN PNEU ANTISTATIQUE POUR ROUES DE VÉHICULE ET PNEU ANTISTATIQUE AINSI OBTENU

(30) Priority: 29.12.2016 IT 201600132491
(43) Date of publication of application: 06.11.2019
(73) Proprietor: Pirelli Tyre S.p.A., 20126 Milano (IT)
(72) Inventor: BEATRICE, Elena, I-20126 Milano (IT); RESMINI, Emiliano, I-20126 Milano (IT); AZZARETTO, Riccardo, I-20126 Milano (IT)
(74) Representative: Porta & Consulenti Associati S.p.A.
(86) International application number: PCT/IB2017/058452
(87) International publication number: WO 2018/122754

(56) References cited:
- EP-A1- 2 465 711
- EP-A1- 2 615 131
- EP-A1- 3 012 095
- US-A1- 2003 089 436
- US-A1- 2009 114 321

## Description

### Field of the invention

The present invention relates to a process for manufacturing an antistatic tyre for vehicle wheels and to an antistatic tyre obtained by such a process.

More specifically, the present invention relates to a process for manufacturing an antistatic tyre for vehicle wheels incorporating an electrically conductive material in the tread band and in which the tread band is formed by depositing contiguous circumferential coils of at least one continuous elongated element of non-vulcanized elastomeric material (also defined in the present description with the term: green elastomeric material).

### State of the art

Tyres for vehicle wheels typically have a certain degree of electrical conductivity so as to promote the discharge to the ground of possible electrostatic charges accumulated by the vehicle during travel.

In this regard, there are different standards that classify tyres according to their electrical resistivity and/or set the maximum limits of resistivity that the tyres can have as a function of the type of use. As an example, standard ISO16392:2007 defines a category of tyres for normal applications with electrical resistance of lower than 10¹⁰ ohm, and a category of tyres used on industrial vehicles intended for transporting explosive materials with electrical resistance lower than 10⁶ ohm.

Typically, the electrical conductivity is obtained thanks to the presence of carbon black, a conductive material, usually used as reinforcing filler inside the rubber compounds constituting the components of the tyre.

The electrostatic charges that accumulate on the body of the traveling vehicle are transmitted to the tyre itself through the rim of the wheel and fully cross the structure of the tyre moving through the aggregates of carbon black present in the polymeric matrix of the elastomeric material, to be finally released to the ground at the contact area (ground contacting area) between the rolling surface of the tread band and the ground itself.

The constant search for a reduction in fuel consumption through the reduction of the rolling resistance of tyres has led to the development of the latter by using elastomeric compounds reinforced with silica (capable of giving the compound better hysteretic features) in preponderant amount and with minimal, or negligible, amounts of carbon black.

The reduction below a certain amount (also defined as: percolation threshold) of the carbon black in the polymeric material that makes up the tread band and possible layers arranged between the tread band and the belt structure, results in a substantial increase in the electrical resistance of the tyre, since the conductive bridges provided by the carbon present in the carbon black are greatly reduced or missing entirely.

The electrostatic charges produced in the vehicle while running cannot therefore be adequately discharged to the ground and tend to accumulate reaching undesired potentials.

Typically, in order to avoid the problem, steps are undertaken to insert a conductive element in the tread (generally defined as: conductive insert) that restores the release to the ground of the electrostatic charges by placing the ground in contact with a conductive part of the tyre (e.g. the carcass structure or the belt structure).

In recent times, moreover, a progressive convergence has taken place towards production processes in which the building of the tread band takes place by winding continuous elongated elements of green elastomeric material on the belt structure, suitably built on a supporting element, according to contiguous circumferential coils.

Thus, for example, EP 1 857 262 discloses a method for manufacturing a tyre for a vehicle wheel, in which the tread is produced by spirally winding a strip of material comprising a non-vulcanized rubber compound provided with a conductive material, wherein a conductive powder or a conductive powder optionally suspended in a liquid, is applied to the strip of elastomeric material.

EP 1 632 367 discloses a tyre that comprises a conductive tread part, arranged in an inner side of a tread portion, and a rubber portion of the tread comprising a body of rubber strips in which a rubber strip is wound and overlapped according to circumferential coils. A radially outer surface of the rubber portion of the tread forms a tread-ground contact surface, and a radially inner surface of the rubber portion of the tread is in contact with the conductive part of the tread. At least one surface of the rubber strip is formed with a conductive film made of a conductive material. An outer edge of the conductive film appears in the tread-ground contact surface, whereas an inner edge of the conductive film is in contact with the conductive part of the tread so that the conductive film forms a conductive path.

EP 3 012 095 discloses a method for producing a pneumatic vehicle tire with a tread strip which is multilayered in the radial direction and consists of at least a single-layer tread cap (3, 3') and a tread base (2, 2'), at least the tread cap (3, 3') consisting of an electrically non-conductive rubber mixture and is produced in one or more layers by winding at least one material strip (4, 4') from an electrically non-conductive rubber mixture. According to this reference, the electrically conductive material which is present in the vulcanized tire between the outside of the tread and an electrically conductive rubber mixture in the tread base (2, 2') or in a layer in the substructure of the tread creates a connection during the winding process.

In the method, a section of the tread cap is wound in the axial direction, the electrically conductive material is applied in stripes on the tread base (2) or the layer in the substructure and at least on the last wound turn of the tread cap (3, 3'), and then the tread cap is applied (3, 3') fully wound.

US 2009/0114321 discloses a pneumatic tire that can maintain processability and tire performance such as rolling resistance or a wet performance of a tire, overcome the problem of non-conductivity by a tread rubber of silica formulation or the like, and sustain conductive performance of a tire over a long period of time is provided. The pneumatic tire includes a non-conductive tread and a side wall, a rubber member comprising a conductive rubber, penetrating a tread rubber from the outer surface of a cap tread being provided to form a continuous conducting path to a rim via a cap ply, a belt, a carcass and a rim strip.

The rubber member includes a rubber composition comprising 100 parts by weight of a rubber component containing from 50 to 100 parts by weight of a diene rubber having a weight average molecular weight (Mw) of from 250,000 to 450,000, and from 10 to 30 parts by weight of carbon black having a nitrogen adsorption specific surface area (N₂SA) of from 700 to 1,300 m²/g and a dibutyl phthalate (DBP) absorption of from 300 to 550 cm³/100 g.

EP 2 615 131 discloses a pneumatic tire using a rubber composition which makes it possible to keep rolling resistance low, prevent the accumulation of static electricity during the running of the tire, suppress an increase over time in electrical resistance of the tire, and improve durability.

The disclosed tire relates to a rubber composition, including: a rubber component including two or more diene rubber; and carbon black having a nitrogen adsorption specific surface area of 400 m²/g or more in an amount of 5 to 30 parts by mass per 100 parts by mass of the rubber component, wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

US 2003/0089436 discloses a pneumatic tire having improved conductivity whereby the tire is provided with at least one conductive pathway extending through the tread surface and contacting the tread cushion. Conductive pathways are created by introducing small volumes of high carbon black concentration. Such pathways provide low electrical resistance and dissipation of static charge accumulation on a motor vehicle.

### Summary of the invention

The Applicant has observed that the construction solutions of the state of the art proposing to overcome the problem of an increase of the electrical resistance of tyre can have some technological and functional limitations.

In particular, in manufacturing processes by spirally winding tread strips of elastomeric material, the Applicant deems that the use of a pre-treatment step of the strips of elastomeric material that provides for the application of conductive materials on their surface before they are laid down to form the tread band of the tyre, can result in poor adhesion therebetween after vulcanisation, causing tearing phenomena of the tread band.

The Applicant has in particular observed that the aforementioned conductive material (whether powdered, in suspension in a liquid or in solution), by constituting a physical-chemical separation element between the circumferential coils of elastomeric material, can trigger premature wearing phenomena as the tyre is used, reducing the mileage of the tyre.

The Applicant has also observed that the application step of powders, suspensions or conductive solutions on the strips to be wound has a criticality of realisation since any non-homogeneity in the distribution of such conductive materials inside the tread band can compromise the conductive properties of the tyre.

The Applicant has therefore afforded the problem of identifying improvements to the process for manufacturing antistatic tyres for vehicle wheels capable of reducing and/or solving the aforementioned drawbacks.

More particularly, the Applicant has afforded the problem of producing tyres possessing suitable antistatic properties that are at the same time capable of offering adequate performance during use, avoiding phenomena of irregular wear and/or of the tread band tearing and ensuring adequate mileage in safety and comfort during driving.

All of this while containing the costs and simplifying the manufacturing process.

In accordance with the present invention, it has surprisingly been found that these desired features can be simultaneously achieved by selecting and suitably combining the properties of the electrically conductive material, the features of the carbon black used therein, as well as the methods of application and incorporation of said electrically conductive material in the tread band of the tyre.

Therefore, the present invention relates, in a first aspect, to a process for manufacturing a tyre for vehicle wheels according to claim 1.

More particularly, the present invention refers to a process for manufacturing a tyre for vehicle wheels comprising a tread band at a radially outer position with respect to an inner tyre component having at least one electrically conductive surface, wherein the process comprises:
i) forming said inner component of the tyre on at least one supporting element, so as to arrange said at least one electrically conductive surface at a radially outermost position with respect to the inner component, the electrically conductive surface extending substantially for the entire circumferential development of said inner component;
ii) forming at least a first portion of the tread band at a radially outer position with respect to said at least one electrically conductive surface, by depositing at least one continuous elongated element of green elastomeric material according to contiguous circumferential coils, wherein said first portion of the tread band comprises at least one radially outer part defining a radially outer surface of the tread band of the tyre and has an exposed surface extending for at least an entire thickness of tread band between said electrically conductive surface and said radially outer surface of the tread band for the entire circumferential development of the tread band;
iii) applying, on said substantially radially extending exposed surface an electrically conductive material comprising at least one carbon black having a BET surface area, measured in accordance with standard ASTM D 6556-16, of at least 300 m²/g and an OAN (Oil Absorption Number) absorption value, measured in accordance with standard ASTM D2414-16, equal to or greater than 200 (ml oil/100 g carbon black) so as to form an electrically conductive layer having a thickness, measured along a transversal cross section with respect to the rolling direction of the tyre (1), of 0.001 - 0.5 mm, and having a substantially radial extension at least equal to the thickness of the tread band (7);
iv) forming at least a second portion of tread band at a radially outer position with respect to said electrically conductive surface, by depositing at least one continuous elongated element of green elastomeric material according to contiguous circumferential coils, at an axially contiguous position to the electrically conductive layer, so as to incorporate the same in the thickness of the tread band.

Due to its BET surface area value, measured in accordance with standard ASTM D 6556-16, of at least 300 m²/g, the carbon black of the conductive material can be defined, and can thus be so indicated in the present application, as "ultrafine carbon black".

Due to its Oil Absorption Number (OAN), measured in accordance with standard ASTM D2414-16, equal to or greater than 200 (ml oil/100 g carbon black) the carbon black of the conductive material can be defined, and can thus be so indicated in the present application, as "structured carbon black".

The Applicant has found that thanks to a suitable selection and combination of the properties of the electrically conductive material, in particular of the features of the carbon black used therein, as well as the methods of application and of incorporation of said electrically conductive material in the tread band of the tyre, it is possible to devise a process which allows to obtain, with respect to the prior art, a series of very advantageous technical effects, including:
- a high and homogeneous electrical conductivity of the tyre, obtained by incorporating in the tread band an extremely thin conductive layer that does not therefore have a negative impact on the visual appearance of the tyre after use;
- the substantial absence of phenomena of a differentiated wear between the conductive part and the non-conductive part of the tread band of the tyre obtained by the process. This advantageously allows to reduce the phenomena of irregular wear on the tread band that have a negative impact on the mileage of the tyre and in any case result in a clear drop in performance thereof both in terms of handling and of comfort while driving;
- a substantially complete incorporation without solution of continuity in the non-conductive rubber mixture of the tread band of an electrically conductive layer formed by an electrically conductive material, preventing, after the vulcanisation step of the tread band, tearing phenomena of the vulcanized elastomeric material that can trigger a premature wear of the tread band jeopardizing the mileage of the tyre;
- an improvement of the manufacturing process, both in terms of simplification thereof and of flexibility. The application of the conductive composition during the building step of the tread band, in fact, advantageously eliminates the need for long and expensive pre-treatment steps of the strips of elastomeric material before their deposition. Moreover, the building step of the tread band in accordance with the invention allows to arrange the conductive layer(s) as desired along the axial extension of the tread band as a function of the product specifications that it is wished to obtain.

In a second aspect thereof, the present invention relates to a tyre for vehicle wheels comprising a tread band at a radially outer position with respect to an inner component of the tyre, wherein said tread band incorporates an electrically conductive layer having a thickness, measured along a transversal cross section with respect to the rolling direction of said tyre, of 0.001- 0.5 mm and having a substantially radial extension at least equal to the thickness of the tread band, said electrically conductive layer comprising an electrically conductive material comprising at least one carbon black having a BET surface area, measured in accordance with standard ASTM D 6556-16, of at least 300 m²/g and an OAN (Oil Absorption Number) absorption value, measured in accordance with standard ASTM D2414-16, equal to or greater than 200 (ml oil/100 g carbon black).

In the context of the present description, the term "thickness" referring to the layer of conductive material indicates the distance between the two faces of said layer along the axial direction of the tyre, as identified in a section along the transversal direction with respect to the rolling direction of the tyre itself.

Thanks to the conductive capacity of the electrically conductive layer incorporated in the tread band, said tyre has the advantageous effects outlined above that impart to the same antistatic properties, which allow an effective use thereof capable of preventing, or in any case making negligible, the risk of undesirable, inconvenient and potentially dangerous problems of electrical charges accumulation occurring in the vehicle during travel.

Because of this, the tyre according to the present invention can be defined, and can thus be indicated in the present application, as "antistatic tyre".

In the present description, an electrically conductive material comprising at least one carbon black having a BET surface area, measured in accordance with standard ASTM D6556-16, of at least 300 m²/g and an OAN (Oil Absorption Number) absorption value, measured in accordance with standard ASTM D2414-16, equal to or greater than 200 (ml oil/100 g carbon black) is also described, said material being effective in the production of an electrically conductive tread band of a tyre for vehicle wheels.

Thanks to the use of the electrically conductive material during the formation of the tread band, it is possible to incorporate an electrically conductive layer of suitable electrical conductivity in the tread band that makes negligible the aforementioned risk of undesirable, inconvenient and potentially dangerous problems of accumulation of electrical charges by the vehicle during travel.

Advantageously, said conductive layer does not alter the features of the remaining part of the tread band formed by non-conductive elastomeric material, avoiding, after the vulcanisation step of the tread band, tearing phenomena of the vulcanized elastomeric material that can trigger a premature wear of the tread band jeopardizing the mileage of the tyre.

In the present description and in the following claims, all numerical entities indicating amounts, parameters, percentages and so forth are to be understood as being preceded in all instances by the term "about" unless indicated otherwise. Moreover, all of the ranges of numerical entities include all the possible combinations of the maximum and minimum numerical values and all the possible intermediate ranges, in addition to those specifically indicated hereinbelow.

In the present description and in the following claims, the term "phr" (acronym of parts per hundred parts of rubber) indicates the parts by weight of a given component of elastomeric compound per 100 parts by weight of the elastomeric polymer considered net of possible extender plasticizer oils.

Where not otherwise indicated, all of the percentages are expressed as percentages by weight.

The present invention can, in one or more of the aforementioned aspects, have one or more of the preferred features given hereinbelow, which can be combined as desired according to the application requirements.

### Electrically conductive material

Preferably, the electrically conductive material comprises at least one component selected from the group comprising: at least one vulcanisable polymer and at least one diluent.

When the electrically conductive material comprises at least one vulcanisable polymer, said electrically conductive material also preferably comprises at least one vulcanising agent.

In a preferred embodiment, said electrically conductive material comprises for 100 phr of at least one vulcanisable polymer, between 50 phr and 2,000 phr of at least one diluent, between 1 phr and 15 phr of at least one vulcanising agent and an electroconductively effective amount of said carbon black.

Within the framework of the present application, the term: "electroconductively effective amount" is used to indicate an amount of carbon black sufficient to obtain an electrically conductive layer of electrically conductive material, capable to allow the discharge of electrostatic charges through a tread band that incorporates said layer and in which the remaining part of the tread band is formed by a non-electrically conductive elastomeric material.

Preferably, said electroconductively effective amount of said carbon black is comprised between 1 phr and 200 phr.

Preferably, the electrically conductive material is preferably in fluid form, still more preferably in liquid form.

Preferably, the electrically conductive material in fluid form, still more preferably in liquid form, shows a kinematic viscosity comprised between 1,500-15,000 cP +/- 50cP at 80°C (1 cP = 1 mPa.s), more preferably comprised between 5,000-9,000 cP (measured according to ASTM D2983).

### Polymers

Preferably, the electrically conductive material comprises 100 phr of at least one vulcanisable diene polymer.

The expression "diene polymer" is meant to indicate a polymer or copolymer deriving from the polymerization of one or more different monomers, at least one of which is a conjugated diene (conjugated diolefin).

In a preferred embodiment, such a vulcanisable diene polymer is, after vulcanisation, elastomeric.

Within the framework of the present description, the expression "elastomeric polymer" or "elastomer" is used to indicate a natural or synthetic polymer that, after vulcanisation, can be repeatedly drawn at room temperature to at least double its original length and after removal of the traction load returns immediately and with force to its approximately original length (definition according to ASTM, committee E8, Philadelphia 1976).

In a preferred embodiment, such a vulcanisable diene polymer is solid.

In a preferred embodiment, the electrically conductive material comprises at least one solid diene elastomeric polymer, more preferably having weight average molecular weight (M̅w) greater than 80,000 g/mol.

The weight average molecular weight (M̅w) can be measured according to techniques known in the art, such as, for example, by GPC (Gel Permeation Chromatography) in accordance with the methodology ISO 13885.

Preferably, the solid diene elastomeric polymer can be selected from those commonly used in elastomeric materials capable to be cross-linked with sulphur, which are particularly suitable for producing tyres, in other words, from elastomeric polymers or copolymers with an unsaturated chain characterized by a glass transition temperature (Tg) preferably lower than 20°C, more preferably comprised in the range from 0°C to -110°C.

The glass transition temperature Tg can advantageously be measured using a differential scanning calorimeter (DSC) according to methods well known by those skilled in the art (ISO 22768 "Rubber, raw - Determination of the glass transition temperature by differential scanning calorimetry (DSC)").

Said elastomeric polymers or copolymers can be of natural origin or can be synthetically obtained by polymerization in solution, polymerization in emulsion or polymerization in gaseous phase of one or more conjugated diolefins, possibly mixed with at least one comonomer selected from monovinylarenes and/or polar comonomers in an amount not greater than 60% by weight.

Preferably, the conjugated diolefins contain from 4 to 12, more preferably from 4 to 8 carbon atoms, and can preferably be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof.

1,3-Butadiene and isoprene are particularly preferred.

Monovinylarenes, which can possibly be used as comonomers, preferably contain from 8 to 20, more preferably from 8 to 12 carbon atoms.

Preferably, the monovinylarenes can be selected, for example, from the group comprising: styrene; 1-vinylnaphthalene; 2-vinylnaphthalene; various alkyl, cycloalkyl, aryl, alkylaryl or arylalkyl derivatives of styrene like, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof.

Styrene is particularly preferred.

Polar comonomers, which can optionally be used, can be selected, for example, from the group comprising: vinylpyridine, vinylquinoline, esters of acrylic acid and of alkylacrylic acid, nitriles, or mixtures thereof, like, for example, methyl acrylate, ethyl acrylate, methyl methacrylate, ethyl methacrylate, acrylonitrile, or mixtures thereof.

Preferably, the solid elastomeric diene polymer that can be used in the present invention can be selected, for example, from: cis-1,4-polyisoprene (natural or synthetic, preferably natural rubber NR), 3,4-polyisoprene, polybutadiene (BR), in particular polybutadiene with a high content of 1,4-cis, optionally halogenated copolymers of isoprene/isobutene, copolymers of 1,3-butadiene/acrylonitrile, copolymers of styrene/1,3-butadiene (SBR), copolymers of styrene/isoprene/1,3-butadiene, copolymers of styrene/1,3-butadiene/acrylonitrile, or mixtures thereof.

The solid elastomeric diene polymer can optionally be functionalized by reaction with suitable terminating agents or coupling agents (solid elastomeric diene polymer p'). In particular, the solid elastomeric diene polymers obtained by anionic polymerization in the presence of an organometallic initiator (in particular an organolithium initiator) can be functionalized by reacting the residual organometallic groups derived from the initiator with suitable terminating agents or coupling agents like, for example, imines, carbodiimides, alkyl tin halides, substituted benzophenones, alkoxysilanes or aryloxysilanes.

Preferably, the vulcanisable diene polymer is liquid.

The term "liquid polymer" is used to indicate a diene polymer derived from the polymerization of one or more monomers, at least one of which is a conjugated diene, said polymer being a pourable liquid or a poorly viscous fluid at a temperature of 23°C.

Preferably, the electrically conductive material comprises at least one liquid diene elastomeric polymer, more preferably characterized by one or more of the following parameters:
- a weight average molecular weight (M̅w) lower than or equal to 80,000 g/mol,
- a glass transition temperature (Tg) lower than or equal to 0°C.

Preferably, such a liquid diene elastomeric polymer is characterized by a weight average molecular weight (M̅w) comprised between 500 and 80,000 g/mol, more preferably between 500 and 60,000 g/mol.

Preferably, such a liquid diene elastomeric polymer is characterized by a glass transition temperature (Tg) comprised between -105°C and 0°C, more preferably between -100°C and -50°C.

Preferably, such a liquid diene elastomeric polymer is selected from the liquid polymers and copolymers based on alkylene, preferably based on optionally hydroxy- and epoxy-functionalized butadiene (BR), isoprene (IR), isoprene/butadiene (IBR), styrene/butadiene (SBR), or from depolymerized liquid natural polymers (NR).

Preferably, such a liquid diene elastomeric polymer is selected from liquid polymers based on butadiene (BR).

Preferably, said liquid polymers based on butadiene (BR) have a weight average molecular weight comprised between 500 and 30,000 g/mol, preferably between 1,000 and 20,000 g/mol.

Preferably, said liquid polymers based on butadiene (BR) have a glass transition temperature (Tg) between -100°C and 0°C, preferably between -95°C and -50°C.

Preferably, said liquid polymers based on butadiene (BR) have a vinyl content of between 0% and 90%, preferably between 1% and 50%.

Possibly, said liquid polymers based on butadiene (BR) can be modified with maleic anhydride, acidic or esterified carboxyl groups, epoxy groups, hydroxy groups or trialkoxysilane groups.

Preferably, such a liquid diene elastomeric polymer is selected from liquid polymers based on isoprene (IR).

Preferably, said liquid polymers based on isoprene (IR) have a weight average molecular weight comprised between 3,000 and 80,000 g/mol, preferably between 10,000 and 60,000 g/mol.

Preferably, said liquid polymers based on isoprene (IR) have a glass transition temperature (Tg) comprised between -70°C and -30°C.

Optionally, said liquid polymers based on isoprene (IR) can be modified with maleic anhydride, acidic or esterified carboxyl groups, epoxy groups or hydroxyl groups.

Preferably, such a liquid diene elastomeric polymer is selected from liquid polymers based on styrene/butadiene (SBR).

Preferably, said liquid polymers based on styrene/butadiene (SBR), have a weight average molecular weight comprised between 1,000 g/mol and 60,000 g/mol, more preferably between 3,000 and 50,000 g/mol.

Preferably, said liquid polymers based on styrene/butadiene (SBR), have a styrene content comprised between 5% and 50% by weight, preferably between 5% and 30% by weight.

Preferably, said liquid polymers based on styrene/butadiene (SBR) have a Tg of lower than 0°C, more preferably comprised between -70°C and 0°C.

Preferably, such a liquid diene elastomeric polymer is selected from depolymerized liquid natural polymers (NR).

Preferably, said depolymerized liquid natural polymers (NR) have a weight average molecular weight lower than 60,000 g/mol, more preferably lower than 40,000 g/mol.

Examples of liquid elastomeric diene polymers suitable for the purposes of the present invention are:
- liquid polymers based on styrene/butadiene (SBR) commercialized by Cray Valley with the name RICON 100, RICON 181, RICON 184;
- liquid polymers based on butadiene (BR) commercialized by Evonik with the trade name POLYVEST 110, POLYVEST 130, POLYVEST MA 75; commercialized by Kuraray with the name LBR 307, LBR 305, LBR 300; and commercialized by Cray Valley with the name RICON 130, RICON 130 MA8, RICON 130 MA 13, RICON 150, RICON 156, RICON 157;
- liquid polymers based on isoprene (IR) commercialized by Kuraray with the name LIR 30, LIR 50, LIR 403, LIR 410, among the natural polyisoprenes: DPR 35, DPR 40, DPR75, DPR 400 of DPR INDUSTRIES.

In a preferred embodiment, the electrically conductive material according to the present invention comprises a mixture of one or more solid elastomeric diene polymers and/or one or more liquid elastomeric diene polymers, more preferably selected from those described above.

The electrically conductive material according to the present invention can optionally comprise at least one elastomeric polymer of one or more monoolefin with an olefin comonomer, or derivatives thereof (a').

The monoolefins can be selected from the group comprising: ethylene and α-olefin preferably containing from 3 to 12 carbon atoms, such as, for example, propylene, 1-butene, 1-pentene, 1-hexene, 1-octene, or mixtures thereof.

The following are preferred: copolymers from ethylene and an α-olefin, optionally with a diene; homopolymers of isobutene or copolymers thereof with small amounts of a diene, which are optionally halogenated at least in part.

The diene optionally present preferably contains from 4 to 20 carbon atoms and is more preferably selected from: 1,3-butadiene, isoprene, 1,4-hexadiene, 1,4-cicloesadiene, 5-ethylidene-2-norbornene, 5-methylene-2-norbornene, vinylnorbornene, or mixtures thereof.

Among these, the following are particularly preferred: copolymers of ethylene/propylene (EPR) or copolymers of ethylene/propylene/diene (EPDM); polyisobutene; butyl rubbers; halobutyl rubbers, in particular chlorobutyl or bromobutyl rubbers, or mixtures thereof.

### Carbon black

Preferably, the electrically conductive material comprises an amount equal to or greater than 1 phr of said at least one ultrafine, structured carbon black, more preferably not greater than 200 phr of ultrafine, structured carbon black. In a preferred embodiment, said electrically conductive material comprises from 1 phr to 100 phr, more preferably from 10 phr to 60 phr, of said at least one ultrafine, structured carbon black.

Carbon blacks suitable for being included in the electrically conductive material are, for example BLACK PEARLS^{®} 2000 of Cabot, Ketjenblack^{®} EC-600JD of Akzo/Nobel, Printex XE-2 of Degussa.

Preferably, the BET surface area of said ultrafine, structured carbon black is at least 900 m²/g, preferably not greater than 3,000 m²/g, even more preferably comprised between 700 m²/g and 1,700 m²/g.

Preferably, the Oil Absorption Number OAN of said ultrafine, structured carbon black is equal to or greater than 300 (ml oil/100 g carbon black).

Preferably, the Oil Absorption Number OAN of the ultrafine, structured carbon black is equal to or lower than 600 (ml oil/100 g carbon black), even more preferably equal to or lower than 450 (ml oil/100 g carbon black).

It has unexpectedly been found that thanks to the use of an ultrafine, structured carbon black having particular features of surface area and of OAN absorption, this feature being linked to the "structure" or degree of aggregation of the particles of the carbon black, it is possible to keep the properties of electrical conductivity of the tyre, whilst still concentrating said ultrafine, structured carbon black in a volumetrically negligible portion of the tyre, to the benefit of a lower rolling resistance thereof.

Optionally, the electrically conductive material can also comprise a carbon black of the standard type for elastomeric tyre compounds (so-called *tyre grade).*

Preferably, the standard tyre grade carbon black is present in an amount comprised between 1 phr and 100 phr, more preferably comprised between 15 phr and 80 phr.

Preferably, in the electrically conductive material the weight ratio between the amount of said tyre grade carbon black and the ultrafine, structured carbon black ranges from 1:20 to 1:1.

Preferably, the standard carbon black (tyre grade) is selected from those having a surface area lower than 300 m²/g, preferably not lower than 20 m²/g, more preferably greater than 50 m²/g (in accordance with standard ASTM D6556-16).

The standard carbon black (tyre grade) is for example N375 or N234, commercialized by Birla Group (India) or by Cabot Corporation.

### Diluent

The electrically conductive material according to the present invention preferably comprises at least one diluent in an amount suitable for making fluid said material.

The electrically conductive material according to the present invention, preferably comprises from 50 phr to 2,000 phr of said at least one diluent.

In a preferred embodiment, the electrically conductive material comprises from 100 phr to 2,000 phr, more preferably from 600 phr to 1,500 phr, of said at least one diluent.

Advantageously, said diluent of the electrically conductive material is selected from the group comprising, or more preferably consists of: at least one plasticizer oil, at least one resin, or mixtures thereof.

The term "plasticizer oil" is used to indicate a process oil derived from petroleum or a mineral oil or a vegetable oil or a synthetic oil or combinations thereof.

The term "resin" is used to indicate a polymer having thermoplastic or at least partially thermoplastic features (as in the case of elastomeric/thermoplastic block copolymers).

The term "thermoplastic features" is used to indicate the tendency of the polymer to increase its viscosity, i.e. to deform plastically when subjected to a temperature increase and/or to a sufficiently great deformation. These features of thermoplasticity distinguish the behavior of a resin from that of an elastomer, as defined above.

Preferably, said plasticizer oil has one or more of the following features:
- a weight average molecular weight (M̅w) not greater than 600 g/mol, or, if of the class of RAE, a weight average molecular weight comprised between 400 and 10,000 g/mol,
   and/or
- a glass transition temperature (Tg) lower than -30°C (according to standard ISO 28343:2010).

Preferably, said plasticizer oil is a process oil derived from petroleum selected from paraffins (saturated hydrocarbons), naphthenes, or mixtures thereof.

Examples of suitable process oils derived from petroleum are aromatic oils, paraffin oils, naphthene oils such as MES (Mild Extract Solvated), DAE (Distillate Aromatic Extract), TDAE (Treated Distillate Aromatic Extract), TRAE (Treated Residual Aromatic Extract), RAE (Residual Aromatic Extract) known in the art.

The term RAE is used to indicate a complex mixture of mainly polycyclic aromatic hydrocarbons obtained by extracting the distillation residue of crude oil with solvents (CAS N. 64742-10-5).

Preferably, said plasticizer oil is a process oil derived from petroleum with a low content of aromatics, for example selected from TDAE, TRAE, MES, paraffin oil or naphthene oils.

Examples of suitable plasticizer oils are the oils derived from petroleum: NYTEX 4700 marketed by Nynas, EXTENSOIL 1471 marketed by Repsol, VIVATEC 500 marketed by H&R; and vegetable oils: RADIA 6132 marketed by Oleon, Agripure AP 18 and Agripure AP 75 marketed by Cargill.

Preferably, said plasticizer oil is an oil of natural (for example vegetable) or synthetic origin derived from the esterification of glycerol with fatty acids, comprising triglycerides, diglycerides, monoglycerides of glycerine, or mixtures thereof.

Preferably, these oils of natural (for example vegetable) or synthetic origin have a glass transition temperature (Tg) lower than -70°C (according to standard ISO 28343:2010).

Examples of suitable vegetable oils are sunflower oil, soybean oil, linseed oil, rapeseed oil, castor oil and cottonseed oil.

Preferably, said plasticizer oil is a synthetic oil selected from the alkyl or aryl esters of phthalic acid or phosphoric acid. Preferably, these esters have a glass transition temperature (Tg) lower than -70°C (according to standard ISO 28343:2010).

### Resins

In a preferred embodiment, the diluent of the electrically conductive material according to the present invention can comprise or essentially consist of at least one resin.

Advantageously, said resin increases the adhesion between adjacent portions of the tread band that incorporate the electrically conductive layer of electrically conductive material.

As far as the resin is concerned, it is preferably a non-cross-linkable polymer (non-reactive resin).

Preferably, the resin is characterized by one or more of the following parameters:
- a weight average molecular weight (M̅w) comprised between 200 and 3,000 g/mol, and/or
- a glass transition temperature (Tg) greater than 0°C (according to standard ISO 28343:2010).

The weight average molecular weight (M̅w) of the resin can be measured according to techniques known in the art, such as, for example, by SEC (Size-Exclusion Chromatography) in accordance with the method ASTM D 6579-11 "Standard Practice for Molecular Weight Averages and Molecular Weight Distribution of Hydrocarbon, Rosin and Terpene Resins by Size-Exclusion Chromatography".

The glass transition temperature (Tg) of the resin and the softening temperature (Tm) can be advantageously measured using a differential scanning calorimeter (DSC) according to methods well known to those skilled in the art such as the method ASTM D 6604 (Glass Transition Temperatures of Hydrocarbon Resins by Differential Scanning Calorimetry).

Preferably, the resin is characterized by a weight average molecular weight (M̅w) comprised between 500 and 3,000 g/mol, more preferably between 500 and 2,000 g/mol.

Preferably, the resin is characterized by a glass transition temperature (Tg) greater than 25°C.

Preferably, the resin has a softening temperature lower than 25°C, preferably lower than 0°C or than -10°C or than -25°C.

The resin used in the electrically conductive material is preferably selected from the group comprising hydrocarbon resins, phenolic resins, natural resins, or mixtures thereof.

Preferably, the resin is a hydrocarbon resin.

Preferably, the resin is a mixture of a natural resin and a hydrocarbon resin.

The hydrocarbon resin can be aliphatic, aromatic or combinations thereof, meaning that the polymer base of the resin can be formed by aliphatic and/or aromatic monomers.

The hydrocarbon resin can be natural (for example vegetable) or synthetic or derived from petroleum. In some cases, not limiting for the invention, these resins essentially contain only hydrogen and carbon atoms.

Preferably, the hydrocarbon resin has a weight average molecular weight comprised between 500 and 3,000 g/mol, more preferably between 700 and 1,500 g/mol.

Preferably, the hydrocarbon resin is selected from homo- or copolymers of cyclopentadiene (CPD), of dicyclopentadiene (DCPD), homo- or copolymers of terpene, homo- or copolymers of fraction C5 and mixtures thereof, preferably copolymers of DCPD/aromatic vinyl compounds, of DCPD/terpenes, of DCPD/C5 fraction, of terpenes/aromatic vinyl compounds, of fractions C5/aromatic vinyl compounds, and combinations thereof.

Examples of aromatic vinyl monomers comprise styrene, alpha-methylstyrene, ortho-, meta-, para-methylstyrene, vinyl-toluene, para-tert-butyl styrene, methoxy-styrenes, chloro-styrenes, vinyl-mesitylene, divinyl-benzenes, vinylnaphthalenes, vinyl aromatic monomers derived from fraction C8-C10, in particular from C9.

Preferably, the hydrocarbon resin is selected from the resins derived from coumarone-indene, styrene-indene, styrene-alkylstyrene, and aliphatic resins.

Specific examples of commercially available hydrocarbon resins are the resins NOVARES C, produced by RUTGERS CHEMICAL GmbH (synthetic indenecoumarone resins), NOVARES C10, C30 and C90 being particularly preferred.

Examples of commercially available styrene-indene hydrocarbon resins are UNILENE A 100, produced by Braskem and Novares TL 90, produced by Ruetgers.

Examples of commercially available alkyl-styrene hydrocarbon resins are: Sylvares SA 85, produced by Arizona Chemical, Kristalex F 85, produced by Eastman.

Examples of commercially available aliphatic hydrocarbon resins are: Escorez^{®} 1102 (produced by ExxonMobil), Piccotac 1100 (produced by Eastman), Quintone A 100 (produced by Zeon Chemicals).

Preferably, the resin is a phenolic resin.

Preferably, the phenolic resin is selected from resins based on alkylphenolformaldehyde, alkylphenol resins modified with rosin, resins based on alkylphenol-acetylene, modified alkylphenol resins and resins based on terpenephenol.

Specific examples of commercially available phenolic resins that can be used in the present invention are: RESINA SP-1068 (produced by SI GROUP Inc.) (octylphenol-formaldehyde resin); DUREZ 32333 (produced by Sumitomo Bakelite) (tert-butylphenol-formaldehyde resin); KORESIN (produced by BASF Company) (p-t-butylphenol-acetylene resin); SYLVARES TP 115 (produced by Arizona Chemicals) (terpene-phenolic resin).

Preferably, the resin is a natural resin based on terpene.

Preferably, the resin is a polyterpene resin selected from the homo- or copolymers of alpha-pinene, of beta-pinene, of limonene, and of vinyl aromatic monomers (styrene) and/or of aromatic monomers (phenol).

Preferably, the resin is a polyterpene resin having a glass transition temperature (Tg) greater than 25°C.

Preferably, the resin is a polyterpene resin having a softening temperature (Tm) comprised between 50°C and 150°C.

Preferably, the resin is a polyterpene resin having a weight average molecular weight comprised between 500 and 3,000 g/mol.

Examples of commercially available natural resins based on terpene that can be used in the present invention are: Piccolyte F90 and Piccolyte F105, produced by PINOVA; Dercolyte A 115 and Dercolyte M 115, produced by DRT.

An example of terpene resin is commercialized with the name Dercolyte TS105 (DRT) (terpene and styrene copolymer).

Preferably, the resin is a rosin-based natural resin.

The term "rosin-based" commonly indicates mixtures of isomer organic acids (rosin acids) characterized by a common structure, comprising three fused C6 rings, by double bonds in different number and positions and by a single carboxyl group.

Examples of rosin-based resins are marketed by DRT with the name HYDROGRAL G and DERTOLINE P 105.

The diluent can consist of oils and/or resins, thus used alone or in mixture.

### Plasticizing mixture

Optionally, the electrically conductive material can comprise, as diluent, a plasticizing mixture, the term "plasticizing mixture" being used to indicate the whole of the plasticizer oil and/or resin components. The amount of plasticizing mixture corresponds to the amount of diluent already defined above.

### Vulcanising agent

Preferably, the electrically conductive material according to the present invention can comprise at least one vulcanising agent selected from sulphur and/or molecules containing sulphur that act as sulphur donors.

The sulphur or derivatives thereof can advantageously be selected, for example, from:
(i) soluble sulphur (crystalline sulphur);
(ii) insoluble sulphur (polymeric sulphur);
(iii) oil-dispersed sulphur (for example 33% sulphur known by the trade name Crystex OT33 by Solutia);
(iv) sulphur donors such as, for example, caprolactam disulphide (CLD), bis[(trialkoxysilyl)propyl]polysulphides, dithiophosphates; or mixtures thereof.

Preferably, the electrically conductive material comprises at least 1 phr, 2 phr, 3 phr, 4 phr of at least one vulcanising agent.

Preferably, the electrically conductive material comprises not more than 15 phr, 10 phr, 8 phr of at least one vulcanising agent.

### Vulcanisation adjuvants

The electrically conductive material optionally comprises, together with the vulcanising agent, one or more vulcanisation adjuvants such as vulcanisation activators, accelerators and/or retardants known to those skilled in the art.

Vulcanisation activators that are particularly effective are zinc compounds.

In particular, ZnO, ZnCO₃, zinc salts of saturated or unsaturated fatty acids containing from 8 to 18 carbon atoms are used.

For example, zinc stearate, preferably formed *in situ,* in the electrically conductive material, from ZnO and fatty acid, or magnesium stearate, formed from MgO, or mixtures thereof, are used.

Said vulcanisation activators are optionally used in the electrically conductive material in an amount from about 0.5 phr to about 10 phr. More preferably, said vulcanisation activators are used in the electrically conductive material in an amount from about 1 phr to 5 phr. Even more preferably, said vulcanisation activators are used in the electrically conductive material in an amount from about 1.5 phr to 3.5 phr.

An example of an activator is the product Aktiplast ST commercialized by Rheinchemie.

Optionally, the electrically conductive material can further comprise at least one vulcanisation accelerator.

Vulcanisation accelerators that are commonly used can be selected from, for example, dithiocarbamates, guanidine, thiourea, thiazoles, sulphenamides, sulfenimides, thiourames, amines, xanthates, or mixtures thereof.

An example of a vulcanisation accelerator is N-cyclohexyl-2-benzothiazylsulphenamide commercialized by Lanxess with the name Vulkacit^{®} CZ/C.

Said vulcanisation accelerators are preferably used in the electrically conductive material in an amount from about 0.05 phr to about 10 phr.

More preferably, said vulcanisation accelerators are used in the electrically conductive material in an amount from about 0.1 phr to about 5 phr.

Even more preferably, said vulcanisation accelerators are used in the electrically conductive material in an amount from about 0.5 phr to about 3 phr.

Optionally, the electrically conductive material can comprise one or more vulcanisation retardants, like for example N-cyclohexylthiophthalimide (VULKALENT G, - Lanxess).

Preferably, if present, said retardants are used in an amount comprised between 0.05 phr and 2 phr.

### Other components

In addition to the aforementioned components, the electrically conductive material according to the present invention can advantageously comprise one or more other components, preferably selected from the group comprising, or more preferably consists of, antioxidants, anti-ageing agents, adhesives, antiozonants, modifying resins, fibers, or mixtures thereof, known to those skilled in the art.

### Method for preparing the electrically conductive material

Advantageously, the electrically conductive material according to the present invention can be prepared according to any one of the methods known for this purpose by those skilled in the art, for example the material can be prepared by mixing its various ingredients by using a batch-type (or discontinuous) mixing device and/or by using a continuous mixing device.

In the present description and in the following claims, the term "batch-type, or discontinuous mixing device (or mixer)" indicates a mixing device adapted to be periodically fed with the various ingredients of the material to be prepared in predetermined amounts and to mix them for a predetermined time so as to obtain a batch of said material.

At the end of the mixing step, the entire batch of obtained material is completely discharged from the mixing device in a single operation. Examples of batch-type or discontinuous mixers are internal mixers of the type with tangential rotors (Banbury^{®}) or with intermeshing rotors (Intermix^{®}).

In the present description and in the following claims, the term "continuous mixing device" indicates a mixing device adapted to receive as a continuous feed the ingredients of the material to be prepared, typically from controlled dosage feeders, to mix them in order to produce the material and to discharge the same in a continuous flow (except for possible stops of the mixing device due to maintenance, or change of the recipe of the material).

In the jargon of mixers for elastomeric compounds the continuous mixing device is sometimes indicated with the term: 'mixing extruder', which here is considered equivalent to 'continuous mixer'.

The continuous mixer (in particular its active elements such as the screws or the mixing satellites) is thus provided with mixing portions capable of imparting a high shearing stress to the material that it is mixing, and, interspersed with the mixing portions, with displacing portions capable of giving a thrust to the material being processed to advance the same from one longitudinal end to the other of the inner chamber. The continuous mixer can also be provided with optional redistribution portions.

Examples of continuous mixing devices are those of the twin-screw type or multiscrew type (for example ring mixers), of the intermeshing and co-rotating type, or of the planetary type.

Both the batch-type mixing device, and the continuous mixing device are capable to provide the material that one desires to produce with the same with sufficient energy to mix and homogeneously disperse the various components also in the case of cold feeding of the ingredients and, in the case of a material comprising an elastomeric component, of masticating the elastomeric compound raising the temperature thereof so as to make it workable and plastic to facilitate the incorporation and/or the distribution of the ingredients in the elastomeric polymeric matrix.

Purely as an example, the process for producing an electrically conductive material comprising, as well as said ultrafine, structured carbon black, at least one vulcanisable polymer, at least one vulcanising agent and at least one diluent, can comprise:
- feeding to at least one mixing apparatus comprising at least one discontinuous mixer and/or at least one continuous mixer at least the following components of a first elastomeric mixture:
   i) at least one vulcanisable polymer,
   ii) at least one part of an amount of an ultrafine, structured carbon black
   iii) optionally, at least one part of an amount of at least one diluent,
   iv) optionally, at least one part of an amount of a vulcanisation agent;
- mixing and dispersing said components so as to obtain said first elastomeric mixture;
- discharging said first elastomeric mixture from said mixing apparatus;
- feeding at least one continuous mixer with said first elastomeric mixture and at least one part of said amount of at least one diluent and of a vulcanisation agent;
- mixing and dispersing said at least one part of said amount of at least one ultrafine, structured carbon black, of a vulcanisation agent and of a diluent, in said first elastomeric mixture by means of said at least one continuous mixer so as to obtain said vulcanisable liquid conductive elastomeric composition;
- discharging said vulcanisable liquid conductive elastomeric composition from said at least one continuous mixer.

The electrically conductive material thus obtained can thus be stored or sent directly to the subsequent manufacturing steps of the tyre according to the present invention.

### Elastomeric materials of the other tyre components

The other tyre components and in particular the tread band components can comprise one or more of the ingredients that can be used to produce the electrically conductive material, described above.

Said other tyre components can be made with one or more elastomeric materials comprising 100 phr of at least one vulcanisable polymer selected from the polymers described earlier.

The elastomeric material for the tread as well as the elastomeric materials for the other tyre components can be obtained by suitably mixing the at least one elastomeric polymer with the other ingredients.

The elastomeric material for the tread and/or for the other tyre components comprises at least 10 phr of at least one reinforcing filler.

Preferably, said elastomeric material comprises at least 20 phr or 30 phr or 40 phr or 50 phr of at least one reinforcing filler.

Preferably, said elastomeric material comprises not more than 200 phr or 150 phr or 140 phr or 130 phr or 120 phr or 110 phr or 100 phr of at least one reinforcing filler.

Preferably, said elastomeric material comprises from 10 to 150 phr or from 30 to 120 phr or from 50 to 120 phr or from 70 to 110 phr or from 80 to 100 phr of at least one reinforcing filler.

In the preparation of the present elastomeric material, the reinforcing filler is generally added during the first mixing and dispersing step.

Preferably, in the elastomeric material for the tread band, the at least one major reinforcing filler is a white filler.

Preferably for the other tyre components the reinforcing filler of the elastomeric material can be a white filler or carbon black or a mixture thereof.

Preferably, said white filler is selected from hydroxides, oxides and oxide hydrates, salts and hydrated salts of metals, silicate fibers or mixtures thereof.

The amount of white filler contained in the elastomeric material for tyre components, preferably for the tread band, does not *per* se represent a critical parameter, but better results in terms of improvement of the workability of the material are obtained with amounts of reinforcing filler lower than or equal to 200 phr, preferably comprised between about 10 phr and about 150 phr, even more preferably comprised between about 15 phr and about 80 phr.

### Silica-based reinforcing filler

Preferably, said white filler is based on silica.

In the present description and in the following claims, the expression "silica-based reinforcing filler" (or briefly also "silica") is used to indicate a reinforcing agent based on silicon dioxide (actual silica), silicates, or mixtures thereof.

Preferably, the silica-based reinforcing filler has a surface area, measured according to the BET method, comprised between 80 and 220 m²/g, preferably between 160 and 180 m²/g.

Among the specific and preferred examples of silica are, in particular, a pyrogenic silica, a precipitated amorphous silica, wet silica (silicic acid hydrate), or mixtures thereof.

Examples of silica-based reinforcing fillers that can be used according to the present invention are commercially available products with the names Hi-Sil^{®} 190, Hi-Sil^{®} 210, Hi-Sil^{®} 215, Hi-Sil^{®} 233, Hi-Sil^{®} 243, by PPG Industries; Ultrasil^{®} VN2, Ultrasil^{®} VN3, Ultrasil^{®} 7000 by Degussa; Zeosil^{®} 1165MP by Rhodia (Solvay).

Specific examples of preferred silicates are phyllosilicates such as for example montmorillonite, bentonite, nontronite, beidellite, volkonskoite, hectorite, saponite, sauconite, vermiculite, halloysite, sericite, or mixtures thereof. Montmorillonite is particularly preferred. These layered materials generally contain interchangeable ions such as sodium (Na⁺), calcium (Ca²⁺), potassium (K⁺), magnesium (Mg²⁺), hydroxide (OH⁻) or carbonate (CO₃²⁻) present on the surfaces between the layers.

### Additional reinforcing filler

Optionally, said elastomeric material can also comprise at least one additional reinforcing filler such as for example alumina, hydrotalcite, calcium carbonate, kaolin, titanium dioxide, and mixtures thereof.

### Carbon black for the tread band

Optionally, the reinforcing filler of the elastomeric material for the tread band further comprises carbon black.

Preferably, the carbon black of the elastomeric material of the tread band is present in an amount comprised between 0.1 phr and 20 phr, preferably between about 5 phr and about 15 phr.

Preferably, the carbon black is selected from those of standard grade for tyres, so-called tyre grade, i.e. having a surface area not lower than 20 m²/g, more preferably greater than 50 m²/g (measured in accordance with standard ASTM D6556-16).

In a preferred embodiment, said carbon black is selected from those having a surface area equal to or lower than 300 m²/g (measured in accordance with standard ASTM D6556-16).

According to a preferred embodiment, when the carbon black is used as additional reinforcing filler of said elastomeric material, said carbon black is selected from those in use for tyres (tyre grade) having a surface area not lower than 20 m²/g (measured in accordance with standard ASTM D 6556-16) preferably not greater than 300 m²/g and it is advantageously present in the vulcanisable compound in an amount lower than or equal to 20 phr, preferably in an amount comprised between 0.1 phr and 10 phr.

Examples of such tyre grade carbon blacks are those of series 200, 300, 600, 700 according to classification ASTM (standard D 1765) for example N234, N326 N330, N347 N375, N683, N772.

The carbon black is for example N375 or N234 commercialized by Birla Group (India) or by Cabot Corporation.

### Vulcanising agent for other tyre components

The elastomeric material for the tread band and/or for other components of the tyre comprises at least 0.05 phr of at least one vulcanising agent.

Preferably, said elastomeric material comprises at least 0.1 phr, 1 phr, 2 phr, 3 phr, 4 phr of at least one vulcanising agent.

Preferably, said elastomeric material comprises not more than 15 phr, 10 phr, 8 phr of at least one vulcanising agent.

Preferably, said elastomeric material comprises from 0.05 to 15 phr or from 0.1 to 10 phr or from 0.2 to 10 phr or from 1 to 10 phr or from 2 to 10 phr of at least vulcanising agent.

Preferably, the vulcanising agent is selected from sulphur and molecules containing sulphur that act as sulphur donors, for example those described above for the electrically conductive material.

As described above, the vulcanising agent is preferably used together with adjuvants such as activators, vulcanisation accelerators and/or retardants known to those skilled in the art.

Vulcanisation activators, which are particularly effective, are zinc compounds. In particular, ZnO, ZnCO₃, zinc salts of saturated or unsaturated fatty acids containing from 8 to 18 carbon atoms are used.

As described above, for example, zinc stearate, preferably formed *in situ,* in the elastomeric composition, from ZnO and fatty acid, or magnesium stearate, formed from MgO, or mixtures thereof is used.

Said vulcanisation activators are preferably used in said elastomeric material in an amount from about 0.5 phr to about 10 phr. More preferably, the vulcanisation activators are used in the elastomeric material in an amount from about 1 phr to 5 phr. Even more preferably, the vulcanisation activators are used in the elastomeric material in an amount from about 1.5 phr to about 3.5 phr.

An example of an activator is the product Aktiplast ST marketed by Rheinchemie.

Preferably, the elastomeric material can further comprise at least one vulcanisation accelerator.

Vulcanisation accelerators that are commonly used can be selected, for example, from dithiocarbamates, guanidine, thiourea, thiazoles, sulphenamides, sulphenimides, thiourames, amines, xanthates, or mixtures thereof.

An example of a vulcanisation accelerator is N-cyclohexyl-2-benzothiazylsulphenamide commercialized by Lanxess with the name Vulkacit^{®} CZ/C.

Said vulcanisation accelerators are preferably used in the elastomeric material in an amount from about 0.05 phr to about 10 phr.

More preferably, said vulcanisation accelerators are used in the elastomeric material in an amount from about 0.1 phr to about 5 phr.

Even more preferably, said vulcanisation accelerators are used in the elastomeric material in an amount from about 0.5 phr to about 3 phr.

The present elastomeric material can optionally comprise one or more vulcanisation retardants, such as for example N-cyclohexylthiophthalimide (VULKALENT G, - Lanxess).

Preferably, if present, said retardants are used in an amount comprised between 0.05 phr and 2 phr.

In the preparation of said elastomeric material, the vulcanisation adjuvants are generally added during the mixing and dispersion step.

### Coupling agent

The elastomeric material for the tyre components can further comprise from 0.1 to 20 phr of a coupling agent (G).

Preferably, said coupling agent (G) is a silane coupling agent selected from those having at least one hydrolysable silane group, which can be identified, for example, by the following general formula (I):

(R')₃Si-CₙH₂ₙ-X (I)

wherein the groups R', equal or different from one another, are selected from: alkyl, alkoxy or aryloxy groups or from halogen atoms, provided that at least one of the groups R' is an alkoxy or aryloxy group; n is an integer between 1 and 6, including the end values; X is a group selected from: nitrous, mercapto, amino, epoxy, vinyl, imide, chlorine, -(S)ₘCₙH₂ₙ-Si-(R')₃ and -S-COR', wherein m and n are integers between 1 and 6, including the end values, and the groups R' are defined as above.

Among the silane coupling agents, tetrasulphide of bis(3-triethoxysilylpropyl) and disulphide of bis(3-triethoxysilyl-propyl) are particularly preferred. Said coupling agents can be used as such or as a suitable mixture with an inert filler (for example carbon black) so as to facilitate their incorporation in the elastomeric material.

Preferably, said silane coupling agent is present in said elastomeric material in an amount comprised between about 0.1 phr and about 10 phr, preferably between about 0.5 phr and about 7 phr.

In the preparation of the elastomeric material, the silane coupling agent is preferably added during the mixing and dispersion step.

The silica can interact during the mixing with the silane coupling agent, added for the purpose of making the silica compatible and dispersible in the elastomeric polymer.

An example of silane coupling agent is TESPT: bis (3-triethoxysilylpropyl) tetrasulphide available on the market from Evonik with the name Si69.

The elastomeric material can comprise other commonly used additives, selected as a function of the specific application for which the composition is intended, for example anti-ageing agents, anti-reversion agents, adhesives, antiozonants, in particular of the type of p-phenylene diamine, antioxidants, waxes, fibers, or mixtures thereof.

### Preparation of the elastomeric material for the other tyre components

The elastomeric material for the tread band or for the other tyre components can be prepared according to any one of the methods known by those skilled in the art, for example by mixing together the polymeric components with the reinforcing filler and with the other additives possibly present according to the techniques known in the art. For example, said elastomeric material is prepared by mixing in one or more steps carried out by means of batch-type mixers or continuous mixers or by means of both types of mixers.

The mixing can be carried out, for example, using an internal mixer of the type with tangential rotors (Banbury^{®}) or with intermeshing rotors (Intermix), possibly an open mixer of the "open-mill" type and/or in continuous mixers of the Ko-Kneader@ type (Buss) or of the co-rotating or counter-rotating twin-screw type.

Examples of preparation of elastomeric materials for tyre components, in particular with a high silica content, are given in patent EP 2 219 837 B1 in the name of the Applicant.

The elastomeric material for the tread band described above is preferably used, after or at the same time of its preparation, for the preparation of at least one continuous elongated element of green elastomeric material, to be deposited at a radially outer position with respect to the electrically conductive surface of the inner component of the tyre in step ii) and/or iv) of the process according to the present invention.

### Process for manufacturing the tyre

As outlined above, the process for manufacturing a tyre according to the present invention comprises the step i) of forming an inner component of the tyre having at least one electrically conductive surface on at least one supporting element, so as to arrange said at least one electrically conductive surface at a radially outermost position with respect to the inner component, the electrically conductive surface extending substantially for the entire circumferential development of said inner component.

In a preferred embodiment, the step i) of forming an inner component of the tyre comprises forming at least one carcass structure.

In a further preferred embodiment, the step i) of forming said inner component comprises forming at least one belt structure at a radially outer position with respect to the carcass structure.

In a further preferred embodiment, the step i) of forming said inner component comprises forming at least one layer of electroconductive vulcanisable elastomeric material at a radially outer position with respect to said carcass structure or to said belt structure.

Other aspects of step i) of forming said inner component of the tyre are known to those skilled in the art and therefore are not detailed herein any further.

Specific examples of production processes that describe the step i) of forming an inner component of the tyre having an electrically conductive surface suitable for being adopted in the process according to the present invention are for example given in WO 2004/041521, EP 0 928 680, WO 2005/108048, EP 2 190 655, WO 2003/05666, WO 2008/99236 in the name of the Applicant, to be understood as mentioned herein for illustrative and not limiting purposes.

As outlined above, the process for manufacturing a tyre according to the present invention comprises the step iii) of forming at least a first portion of the tread band at a radially outer position with respect to said at least one electrically conductive surface, by depositing at least one continuous elongated element of green elastomeric material according to contiguous circumferential coils, wherein said first portion of the tread band comprises at least one radially outer part defining a radially outer surface of the tread band of the tyre and has an exposed surface extending along at least an entire thickness of the tread band between said electrically conductive surface and said radially outer surface of the tread band for the entire circumferential development of the tread band.

Said step ii) of forming at least a first portion of tread band can be carried out according to any one of the methods known for the purpose by those skilled in the art, for example by feeding the continuous elongated element of green elastomeric material from at least one delivering device.

Preferably, the feeding of said continuous elongated element is carried out by extrusion through said at least one delivering device.

Said step ii) of forming at least a first portion of the tread band is preferably carried out by imparting to said at least one supporting element a rotary motion about its own geometric axis, so as to circumferentially distribute said at least one continuous elongated element of green material according to contiguous circumferential coils. Said rotary motion preferably includes a rotation-translation movement between the supporting element and said delivering device of said at least one continuous elongated element.

Preferably, said exposed surface has a substantially radial development.

In a preferred embodiment, during the step ii) of forming at least a first portion of the tread band, said continuous elongated element is deposited according to axially and/or radially contiguous circumferential coils at least partially overlapping with one another.

In a preferred embodiment, the exposed surface extending for the thickness of the tread band is a radially outer side of the first portion of the tread band formed by a plurality of axially and/or radially contiguous circumferential coils at least partially overlapping with one another.

In said step ii) of forming at least a first portion of the tread band, the adjustment of the extent of overlapping of the coils formed by depositing the at least one continuous elongated element is ensured for example by adjusting at least one from: the rotary motion of the supporting element, the average translation speed of said supporting element with respect to the delivering device of the continuous elongated element, and the average delivering speed of the continuous elongated element itself.

As outlined above, the process for manufacturing a tyre according to the present invention comprises the step ii) of applying, on said substantially radially extending exposed surface, the aforementioned electrically conductive material comprising at least one carbon black having a BET surface area, measured in accordance with standard ASTM D 6556-16, of at least 300 m²/g and an OAN (Oil Absorption Number) absorption value, measured in accordance with standard ASTM D2414-16, equal to or greater than 200 (ml oil/100 g carbon black) so as to form an electrically conductive layer.

Preferably, the electrically conductive material covers a surface at least equal to or greater than that of the substantially radially extending exposed surface, thus possibly also covering parts of the portion of tread band axially and/or radially contiguous to said substantially radially extending exposed surface.

Advantageously, also during step iii) of the process according to the present invention the supporting element is imparted a certain rotary motion, which can have a speed equal to or different from that of step ii).

In a preferred embodiment, the rotary motion imparted to the supporting element in step iii) of the present process is comprised between 10 and 80 revolutions/minute.

In a preferred embodiment of the invention, the electrically conductive material is applied onto the substantially radially extending exposed surface by dispensing from at least one dosing apparatus.

The application of the electrically conductive material, as described above, can be carried out according to any one of the methods known by those skilled in the art for the purpose, such as, for example, manual or mechanical spreading, dispensing by at least one dosing apparatus, spray deposition.

Preferably, the electrically conductive material is applied on the substantially radially extending exposed surface in the form of a film.

In a preferred embodiment of the invention, the electrically conductive material is applied in a film form on said at least one substantially radially extending exposed surface by means of at least one dosing apparatus.

Preferably, the dosing apparatus can comprise at least one tank, or any other storing element, and a possible transport element of the electrically conductive material, and at least one nozzle or a dispensing mouth of appropriate shape.

The dispensing from the dosing apparatus can take place either by gravity or by using a pump, or any other displacing element of the electrically conductive material towards the nozzle or dispensing mouth, preferably withdrawing it from the tank.

In a preferred embodiment, the dispensing takes place by means of a pump, so as to ensure an adjustable flow of predetermined value of the electrically conductive material towards the nozzle or dispensing mouth.

As outlined above, the process for manufacturing a tyre according to the present invention comprises the step iv) of forming at least a second portion of the tread band at a radially outer position with respect to the electrically conductive surface, by depositing at least one continuous elongated element of green elastomeric material according to contiguous circumferential coils, at an axially contiguous position with respect to the electrically conductive layer, so as to incorporate the same in the thickness of the tread band.

Preferably, the step iv) of forming at least a second portion of the tread band is carried out in the same way as outlined above with reference to the first portion of the tread band.

Thus, for example, also in step iv) the supporting element of the inner tyre component is preferably imparted a certain rotary motion and at the same time at least one continuous elongated element of green elastomeric material, as described above is deposited, advantageously by a suitable delivering device adjusted to a suitable delivering speed.

Said continuous elongated element is deposited for the entire circumferential development of the belt structure and thus is progressively wound thereon according to contiguous circumferential coils, thereby forming at least a second portion of the tread band of the tyre, at a radially outer position with respect to the conductive surface and axially contiguous to the electrically conductive layer, so as to incorporate the same in the thickness of the tread band.

Advantageously, also during step iv) of the process according to the present invention the supporting element of the inner tyre component is imparted a certain rotary motion, which can have a speed equal to or different from that imparted in step ii).

In a preferred embodiment and as outlined above, also during step iv) of the process according to the present invention the continuous elongated element can be deposited according to axially and/or radially contiguous circumferential coils at least partially overlapping with one another.

Also in this case, the adjustment of the extent of overlapping of the coils formed by deposition of the at least one continuous elongated element is preferably carried out by adjusting at least one from: the rotary motion of the supporting element, the average translation speed of said supporting element with respect to the dispensing device of the continuous elongated element, and the average dispensing speed of the continuous elongated element itself.

Preferably, in the process according to the present invention during both steps ii) and iv), the continuous elongated elements respectively forming the aforementioned at least a first and at least a second portion of the tread band, are deposited according to axially and/or radially contiguous circumferential coils at least partially overlapping with one another.

In a preferred embodiment, the process according to the present invention provides that at least one of the steps ii) of forming at least a first portion of tread band and iv) of forming at least a second portion of the tread band, even more preferably both steps ii) and iv), are carried out by feeding said continuous elongated elements of the respectively first and second portion of the tread band from at least one delivering device, preferably an extruder, arranged close to the supporting element of the inner tyre component.

In the process according to the present invention, the continuous elongated element of green elastomeric material deposited during step iv) can be of the same or different composition from that of the continuous elongated element of green elastomeric material deposited during step ii).

In a preferred embodiment of the present invention the continuous elongated element of green elastomeric material deposited during step iv) has the same composition as the continuous elongated element of green elastomeric material deposited during step ii).

In a preferred embodiment and in order to satisfy specific requirements it is possible to form a plurality of electrically conductive layers in the thickness of the tread band and in a desired axial position as described above.

The number of electrically conductive layers can for example vary between 2 and 7, preferably between 2 and 5.

In this preferred embodiment, the method according to the invention comprises repeating steps iii) - iv) outlined above for the number of times necessary.

In this preferred case, the method thus comprises the steps of:
iii') applying the aforementioned electrically conductive material on the substantially radially extending exposed surface of the second portion of the tread band so as to form an additional electrically conductive layer; and
iv') forming at least a third portion of the tread band at a radially outer position with respect to the electrically conductive surface, by depositing at least one continuous elongated element of green elastomeric material according to contiguous circumferential coils, at an axially contiguous position to the additional electrically conductive layer, so as to incorporate the same in the thickness of the tread band;
and so on for the number of iterations necessary to obtain the desired number of electrically conductive layers in the thickness of the tread band.

In addition to the process steps i)-iv) described above, the process for manufacturing a tyre for vehicle wheels according to the present invention preferably comprises a step of moulding and vulcanising the green tyre assembled in steps i)-iv).

Further details of the process for manufacturing tyres for vehicle wheels according to a process as outlined above are known *per se* and conventional in the art and will not be described herein any further.

### Tyre

Preferably, the tyre according to the present invention comprises, incorporated in the tread band, at least one electrically conductive layer of electrically conductive material as defined above.

In order to ensure a continuous contact thereof with the ground, said at least one electrically conductive layer is advantageously arranged so as to reach a radially outer surface defining a part of the rolling surface of the tread band at a block or rib of the tread pattern to keep a constant electroconductive connection between the road surface and the conductive surface inside the tyre as long as the tread band wears down.

In the preferred case in which antistatic tyres are made comprising at least two electrically conductive layers, the latter can be arranged in substantially symmetrical positions with respect to the equatorial plane of the tyre, preferably each adjacent to one of the axial edges of the tread band.

Preferably, said at least two electrically conductive layers are also associated to respective mutually offset rows of blocks or ribs along the circumferential direction, so that at least one of these layers is always in contact with the ground.

Preferably, said at least one electrically conductive layer has a thickness comprised between 0.001 and 0.3 mm and even more preferably comprised between 0.005 and 0.1 mm.

Said at least one electrically conductive layer is identifiable in the tyre by means of any one of the methods suitable for the purpose known by those skilled in the art.

An example of a method suitable for the purpose is EDX (Energy Dispersive X-ray Analysis) spectroscopy or EDS (Energy Dispersive X-ray Spectrometry) spectroscopy that exploits the emission of X-rays generated by an accelerated electron beam incident on the sample and the essential principle for which each element has a unique atomic structure that endows the same with a characteristic set of peaks in the X-ray emission spectrum, serving as a fingerprint.

The method is known *per se* and therefore it is not detailed herein any further in its operating principles.

For the use of said method to identify said electrically conductive layer in the tyre according to the present invention, at least one portion of the tread band where it is desired to verify the presence of said electrically conductive layer is sectioned in the transversal direction with respect to the rolling direction of said tyre and analyzed. For the analysis, the surface thus made accessible is scanned along the axial direction with one or more X-rays of characteristic frequency for carbon black (previously identified through an *ad hoc* analysis or literature data), recording the emission of the characteristic peaks of carbon black.

Since the conductive layer is advantageously arranged in a portion of the tread band in contact with the ground, for example the blocks, those skilled in the art will firstly evaluate these parts of the tread band.

Once the presence of the electrically conductive layer has been identified, the determination of its thickness can be carried out by means of analysis of the same (or of an analogous) surface of the tread band, by dimensional analysis of an image, obtained for example with a Stereoscope LEICA M165C, processed by means of a suitable software, for example LAS software.

In particular, the layer appears visibly different from the rest of the rubber, developing for substantially the entire thickness of the tread band itself.

Preferably, the tyre according to the invention is characterized by an electrical resistivity lower than 10⁸ Ohm, more preferably lower than 10⁷ Ohm.

Such an aspect is particularly surprising since said value is solely imparted by the thin layer of vulcanized conductive composition and not by conductive inserts of conventional size (1.5 - 5 mm).

The remaining portions of the tread band, in fact, are formed, as outlined above, by a vulcanized non-electrically conductive elastomeric material.

As outlined above, the tyre according to the present invention comprises an inner component of the tyre at a radially inner position with respect to the tread band.

Preferably, said inner component comprises at least one carcass structure.

Preferably, said inner component comprises at least one belt structure at a radially outer position with respect to said carcass structure.

Preferably, said inner component comprises at least one layer of electroconductive vulcanisable elastomeric material at a radially outer position with respect to said carcass structure or to said belt structure.

Therefore, in the context of the present invention, the electrically conductive surface at a radially outermost position with respect to the inner component is preferably defined by the radially outer surface of at least one component selected from the group comprising: at least one carcass structure, at least one belt structure at a radially outer position with respect to said carcass structure and at least one layer of electroconductive vulcanisable elastomeric material at a radially outer position with respect to said carcass structure and preferably to said belt structure, when the latter is present.

Preferably, the carcass structure comprises at least one carcass ply and at least two annular anchoring structures.

The carcass structure preferably comprises at least one carcass ply having respectively opposite lateral edges associated to respective annular anchoring structures, called bead wires, optionally associated with a bead filler. The area of the tyre comprising the bead wire and the filler forms a bead structure intended to engage the tyre on a corresponding mounting rim.

The carcass structure is usually of the radial type, i.e. the reinforcing elements of the at least one carcass layer are arranged on planes comprising the rotation axis of the tyre and substantially perpendicular to the equatorial plane of the tyre.

Said reinforcing elements generally consist of textile cords, for example rayon, nylon, polyester (for example polyethylene terephthalate (PET) or polyethylene naphthalate (PEN).

The coupling between the carcass structure and the bead structure can be provided by a second carcass ply applied at an axially outer position with respect to the first carcass ply.

In an embodiment of the tyre each bead structure is associated to the carcass structure by folding back opposite lateral edges of the at least one carcass ply around the annular anchoring structure so as to form the so-called folded-back portions of the carcass.

In tyres for applications on mopeds or scooters or vehicles foreseen for lowpowered transportation, the belt structure may not be present.

In such tyres, the tread band can be made by winding at least one elongated element on the carcass structure.

The conductive surface is therefore the radially outer one of the carcass structure or possibly a radially outer layer with respect to the carcass structure made of elastomeric material without elongated reinforcing elements.

In the tyres in which it is present, the belt structure is preferably associated to the carcass structure.

The belt structure can comprise one or more belt layers radially superimposed on one another and radially outer with respect to the carcass structure, typically having textile and/or metallic reinforcing cords incorporated in a layer of elastomeric composition.

Such reinforcing cords can have crossed orientation with respect to a direction of circumferential development of the tyre. The term "circumferential" direction is used to indicate a direction generically aligned to the rotation direction of the tyre.

At a radially outermost position with respect to the belt layers it is possible to apply at least one circumferential reinforcing layer, commonly known as "0° belt", comprising at least one circumferential belt layer axially extending substantially at at least one crown portion.

Such a circumferential reinforcing layer can be present close to the axial ends of the crown of the tyre and/or it can be centrally arranged with respect to the equatorial plane of the tyre for an axial development equal to or greater than at least 50% of the axial extension of the crown of the tyre.

The reinforcing layer (circumferential belt) can comprise a plurality of textile or metallic cords arranged substantially in parallel or at least one elongated element comprising at least one elastomeric material incorporating at least one reinforcing cord arranged to form a plurality of windings arranged according to a substantially zero angle with respect to the equatorial plane of the tyre.

Preferably, said electroconductive vulcanisable elastomeric material comprises at least one elastomeric polymer selected from those defined above in relation to the electrically conductive material or to the rubber composition for the tread band, at least one reinforcing filler based on carbon black, a vulcanising agent and other ingredients known to those skilled in the art.

The structural, constructive, compositional and performance features of the remaining parts of tyres of this kind are known *per* se and are therefore not detailed any further, since they are not necessary to understand the invention, nor limiting the same.

The tyre according to the present invention is suitable for use for automobile, motorcycle and heavy-duty vehicle wheels.

The expression "heavy-duty vehicle" is generally meant to indicate a vehicle belonging to categories M2~M3, N1~N3 and O2~O4 defined in "Consolidated Resolution of the Costruction of Vehicles (R.E.3) (1997)", Annex 7, pages 52-59, "Classification and definition of power-driven vehicles and trailers", such as for example lorries, trucks, tractors, buses, vans and other vehicles of this type.

### Brief description of the figures

Additional features and advantages of the invention will become better apparent from the following description of some preferred embodiments thereof, made hereinafter for exemplifying and not limiting purposes, with reference to the attached drawings.

In the drawings:
- figure 1 illustrates a radial half-section of an antistatic tyre for vehicle wheels according to the invention;

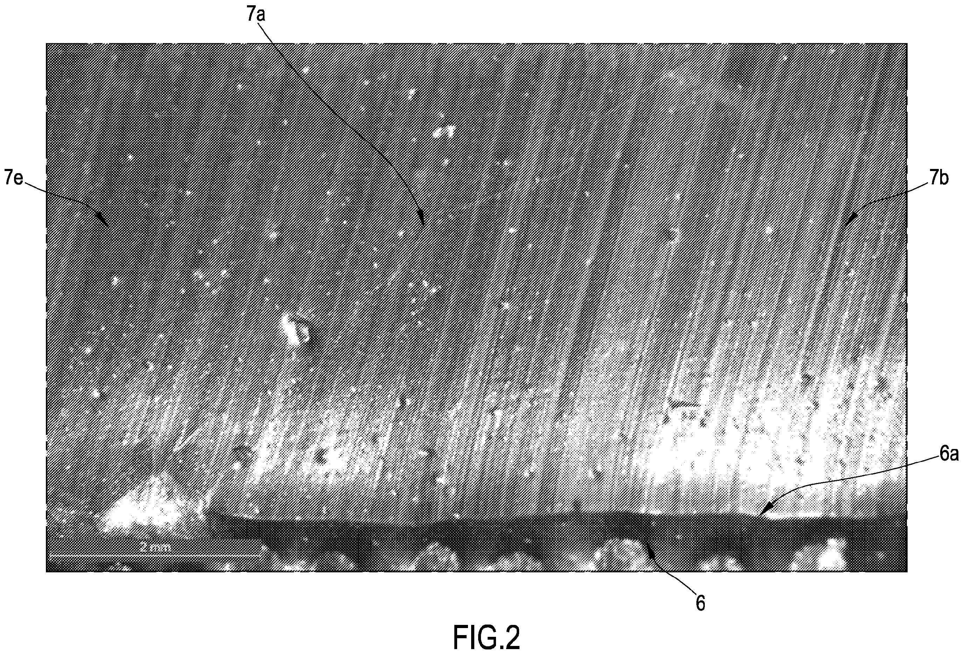

- figure 2 illustrates a photograph in section of the tread band of a tyre according to a preferred embodiment of the invention, in which it is possible to see the electrically conductive layer, obtained with a LEICA M165C Stereoscope software LAS with Lens 1x; with max multiplication factor 12 and video camera fitting 0.5 enlargements. On the bottom left side a reference scale is shown which allows to appreciate the very low thickness of the electrically conductive layer;
- figures 3A-3C, which are not to scale, schematically show respective steps for producing the tread band in a process for manufacturing tyres according to a preferred embodiment of the invention.

### Detailed description of the currently preferred embodiments

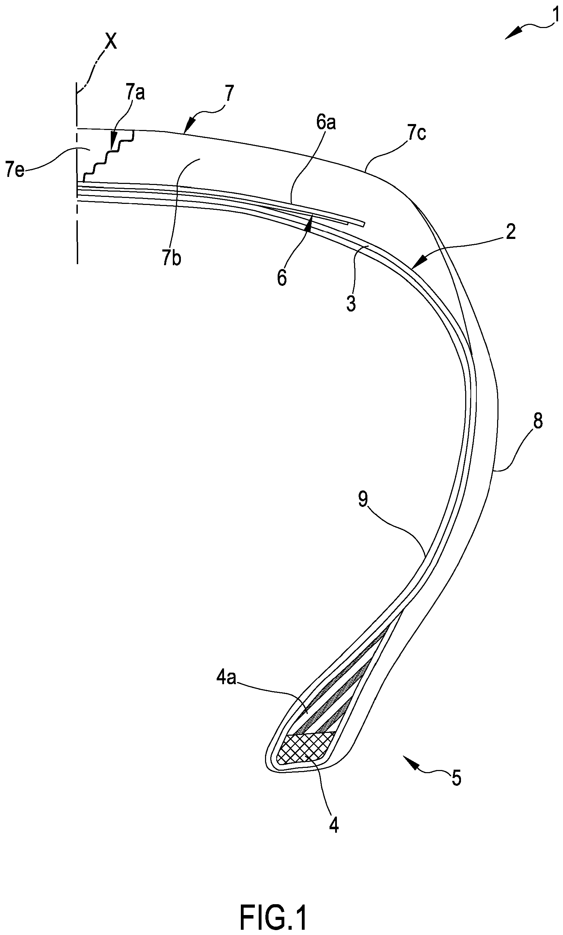

A tyre for vehicle wheels according to a preferred embodiment of the invention is generally indicated with reference numeral 1 in figure 1.

The tyre 1 comprises a carcass structure 2 comprising at least one carcass ply 3 having respectively opposite lateral edges engaged with respective annular anchoring structures 4, optionally associated to elastomeric fillers 4a, integrated in the areas 5 usually identified with the name "beads".

The carcass ply 3 comprises a plurality of textile or metallic reinforcing cords arranged in parallel to one another and at least partially covered by a layer of elastomeric material.

The carcass structure 2 is associated to a belt structure 6 comprising one or more belt layers, radially superimposed with one another and radially outer with respect to the carcass ply 3, having textile or metallic reinforcing cords.

Such reinforcing cords can have crossed orientation with respect to the direction of circumferential development of the tyre 1.

In the preferred embodiment illustrated, the belt structure 6 comprises an electrically conductive surface 6a, in this case consisting of a radially outer surface of the belt layer 6 itself.

Optionally, as radially outermost belt layer, there can be a layer comprising parallel cords oriented according to a substantially circumferential direction (the so-called zero degrees layer - not illustrated), i.e. according to a direction oriented from 0° to about 10° with respect to the circumferential direction. Such a layer can be present for the entire width of the tread or for part of it.

In this further preferred embodiment, the belt layer with reinforcements lying substantially circumferentially at least partially determines the electrically conductive surface of the inner tyre component.

At a radially outer position with respect to the belt structure 6, a tread band 7 incorporating an electrically conductive layer 7a in accordance with the invention is applied.

In particular, the electrically conductive layer 7a comprises an electrically conductive material comprising at least one carbon black having a BET surface area, measured in accordance with standard ASTM D 6556-16, of at least 300 m²/g and an OAN (Oil Absorption Number) absorption value, measured in accordance with standard ASTM D2414-16, equal to or greater than 200 (ml oil/100 g carbon black).

On the lateral surfaces of the carcass structure 2, each extending from one of the lateral edges of the tread band 7 to the respective annular anchoring structure at the beads 5, respective sidewalls 8 made of elastomeric mixture are also applied at an axially outer position.

A radially inner surface of the tyre 1 is also preferably internally coated with a layer of a substantially airtight elastomeric material or so-called "liner" 9.

In the embodiment illustrated in figure 1 the tyre 1 is of the type for motorised vehicles.

Typically, the belt structure 6 comprises in this case at least a radially outer layer comprising textile cords arranged according to a substantially zero angle with respect to the direction of circumferential development of the tyre.

The tyre 1 described above can be manufactured by means of the following manufacturing process that uses system elements and technologies known for example from European Patent EP 0 928 680 in the name of the same Applicant.

In particular, the manufacturing of the tyre 1 can be carried out by consecutively assembling the structural elements of the tyre itself on at least one toroidal support.

In detail, the tyre 1 can be manufactured by axially superposing and/or radially superposing coils of at least one continuous elongated element on the at least one support, said continuous elongated element being a strip of elastomeric material only or a strip of elastomeric material with reinforcing elements incorporated therein (typically textile or metallic cords) or a rubber-coated metallic wire or cord.

According to said process, the at least one support is preferably moved by a robotized system, to reach a plurality of work stations in sequence where, by means of automated sequences, different building steps of the tyre 1 are carried out.

Firstly, the carcass structure 2 is made.

At a radially outer position with respect to the carcass structure 2 the belt structure 6 is realised having, at a radially outer position, the conductive surface 6a on which an elongated element adapted for constituting the tread band 7 is deposited by means of successive windings.

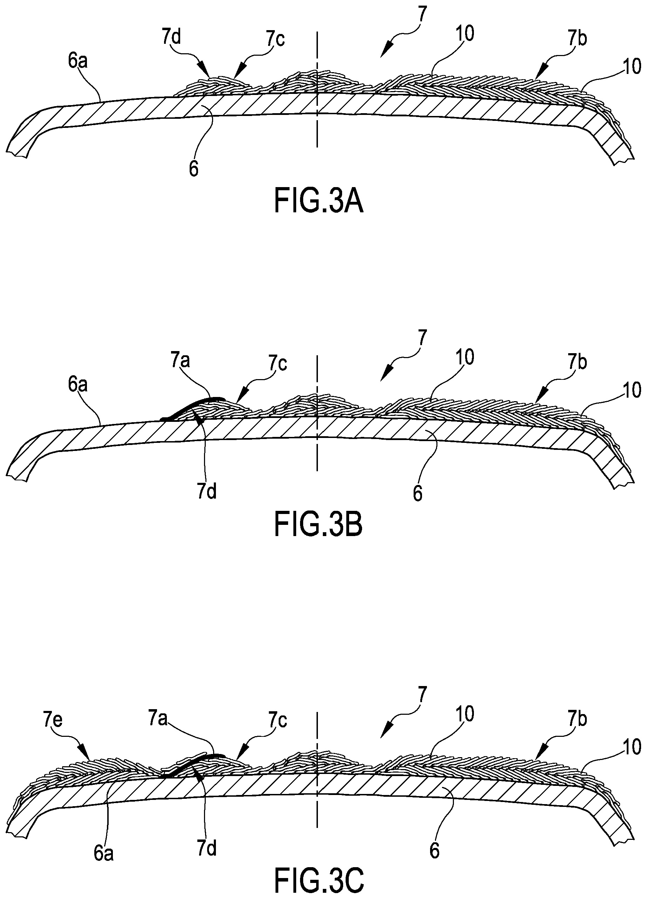

As better illustrated in Fig. 3A, a first portion 7b of the tread band 7 is for example formed at a radially outer position with respect to the conductive surface 6a of an inner tyre component (in this case the belt structure 6), depositing at least one continuous elongated element of green elastomeric material having the composition given in the following Table 3 according to contiguous circumferential coils 10.

Specifically, the deposition of the continuous elongated element is carried out so that the first portion 7b of tread band 7 comprises at least one radially outer part defining a radially outer surface 7c of the tread band 7 of the tyre 1 and has a substantially radially extending exposed surface 7d extending along at least the entire thickness of the tread band 7 between the electrically conductive surface 6a and the radially outer surface 7c of the tread band 7 for the entire circumferential development of the tread band itself.

On said substantially radially extending exposed surface 7d, the layer 7a of electrically conductive material as described above is thus applied, so as to obtain the structure schematically represented in Fig. 3B (in which for mere ease of illustration the layer 7a has been represented in a greatly enlarged scale).

The layer 7a of electrically conductive material can be applied on the substantially radially extending exposed surface 7d of the first portion 7b of the tread band 7 for the entire circumferential development thereof, by means of a dispensing device comprising for example a flat mouth operating at an appropriate temperature, for example comprised between 20°C and 120°C, preferably between 40°C and 100°C.

Once the application of the layer 7a of electrically conductive material has been accomplished, keeping the supporting element in the same conditions of rotary motion, a second portion 7e of the tread band 7 is deposited at a radially outer position with respect to the conductive surface 6a, in the present case by depositing the continuous elongated element of green elastomeric material according to contiguous circumferential coils 10, at an axially contiguous position with respect to the layer 7a of electrically conductive material.

At the end of such a step and as schematically illustrated in Fig. 3C, a tread band structure 7 is obtained in which the layer 7a of electrically conductive material is incorporated in the thickness thereof (also in this case for mere ease of illustration the layer 7a has been represented in a greatly enlarged scale).

The green tyre thus obtained is then subjected to moulding and vulcanisation, for example at a temperature comprised between 140°C and 200°C for a time comprised between 12 and 45 minutes in a mould so as to obtain the tyre 1 illustrated in figure 1.

The invention is now illustrated by means of some Examples to be understood as being intended for illustrative and not limiting purposes.

### Test description

Elastomeric materials for building a tyre according to the invention and a comparative tyre were prepared in the following way (the amounts of the various components are indicated in phr).

For the ultrafine, structured carbon black, the BET surface area, in accordance with the standard ASTM D 6556-16, and the OAN absorption value, in accordance with the standard ASTM D2414-16 were determined.

### EXAMPLES 1-2

The electrically conductive material according to an embodiment of the invention and the comparative composition given in Table 1, were prepared by mixing the components indicated in Table 1 (the amounts of the various components are provided in parts by weight) according to the following ways of operating:

**TABLE 1**

| Example | 1 (*) | 2 (A) |
|---|---|---|
| NR | 100.00 | 100.00 |
| ultrafine structured CB | - | 25.00 |
| standard tyre grade CB | 50.00 | - |
| Zinc oxide | 4.00 | 4.00 |
| 6 PPD | 5.00 | 5.00 |
| CBS | 4.00 | 4.00 |
| Vulcanising agent | 3.50 | 3.50 |
| Oil | 1,000 | 1,000 |

| | | |
|---|---|---|
| (*) comparative - (^) invention NR: natural rubber SIR 20; ultrafine structured CB: Printex XE2 Cabot (BET surface area = 1,000-1,300 m²/g; OAN absorption value = 380 ml oil/100 g carbon black); standard tyre grade CB: tyre grade Carbon black N375 (Birla Group) (BET surface area = 93 m²/g; OAN absorption value = 114 ml oil/100 g carbon black); Zinc oxide: (Rhein Chemie) (Activator); 6-PPD: phenyl-p-phenylenediamine (6-PPD-Akzo Nobel) (Antiozonant); CBS: N-cyclohexyl-2-benzothiazyl-sulphenamide Vulkacit^{®} CZ/C - (Lanxess) (Accelerator); Vulcanising agent: Sulphur (Zolfoindustria); Oil: TDAE Treated Distillate Aromatic Extract Vivatec 500 (H&R). | | |

### First step

The elastomeric polymer, the filler (respectively the tyre grade carbon black for the comparative compound and the ultrafine structured carbon black for the compound according to a preferred embodiment of the invention) and a part of diluent (oil) - were fed and mixed in a Banbury^{®} batch-type mixer (model Pomini 11-D), which was operated in the following conditions and subsequently discharged:
capacity: 200 I;
feed: 180-190 kg;
discharge temperature: 140-150°C;
mixing time: 5 minutes;
rotor speed: 40 revolutions/minute;
pressure: ambient.
Second step

The elastomeric composition obtained in the first step, the agent and the vulcanisation additives zinc oxide, the 6-PPD and the CBS and sulphur were subsequently fed to the same Banbury^{®} mixer described above with reference to the first step, subjected to a further mixing step in the following conditions and discharged:
feed: 180-190 kg;
discharge temperature: 100°C;
mixing time: 2-2.5 minutes;
rotor speed: 25-30 revolutions/minute;
pressure: ambient.

### Third step

The elastomeric composition obtained at the end of the second step and the remaining part of diluent were subsequently fed into a co-rotating twin-screw continuous mixer having a cylinder diameter of 40 mm and an L/D ratio equal to 48 (model Maris TM40HT) and subjected to a further mixing step in the following conditions, to then be stored before the subsequent processing:
feed: 70 kg/h;
temperature of composition leaving the mixer: 125°C;
speed of the screws: 220 revolutions/minute;
filling degree: 77%;
specific energy: 0.22 kWh/kg.

The compositions thus obtained were then characterized to determine the viscosity (according to ASTM D2983). The results are shown in Table 2.

**TABLE 2**

| Example | 1(*) | 2(^) |
|---|---|---|
| Viscosity (cP) | 2,200 | 3,000 |

| | | |
|---|---|---|
| (*) comparative - (^) invention | | |

### EXAMPLES 3-4

The elastomeric mixture for the tread band shown in Table 3 was prepared in the following way (the amounts of the various components are indicated in phr).

All of the components, with the exception of sulphur, accelerator (TBBS) and retardant (PVI), were mixed in an internal mixer (model Pomini PL 1,6) for about 5 minutes (1^{st} step). As soon as the temperature reached 145 ± 5°C, the elastomeric material was discharged. The sulphur, accelerator (TBBS) and retardant (PVI) were added and the mixing was carried out in a co-rotating twin-screw continuous mixer having a cylinder diameter of 40 mm and an L/D ratio equal to 48 (model Maris TM40HT) (2^{nd} step).

**TABLE 3**

| TREAD COMPOUND | |
|---|---|
| 1^{st} STEP | |
| NR | 15 |
| BR | 15 |
| SBR | 70 |
| CB | 2.00 |
| Silica | 70.00 |
| Silane | 5.00 |
| Tackifier resin | 6.00 |
| Zinc oxide | 3.30 |
| Stearic Acid | 2.00 |
| Mineral oil | 25.00 |
| TMQ | 1.00 |
| 6PPD | 2.00 |

| 2^{nd} STEP | |
|---|---|
| PVI | 0.30 |
| TBBS | 1.50 |
| Vulcanizer | 2.00 |

| | |
|---|---|
| NR: natural rubber, SMR-GP, Lee Rubber; BR: Europrene Neocis BR40 Versalis; SBR: Sprintan SLR 4630 Trinseo; CB: carbon black N375, Cabot; Silica: Silica Ultrasil 7000, Ege Kymia Silane: 50% tetrasulphide of bis(3-triethoxysilylpropyl) on 50% carbon black, X50S, Degussa-Huls; Tackifier resin: Quintone A100, Zeon Corporation; Stearic acid: (Undesa) Zinc oxide: (Rhein Chemie) Mineral oil: MES (Mild Extraction Solvate), ENI Spa; TMQ: 2,2,4-trimethyl-1,2 dihydroquinoline, Kemai; 6PPD: N-(1,3-dimethyllbutyl)-N'-phenyl-p-phenylenediamine, Chemtura Corporation; PVI: cyclohexyl-thiophthalimide, Santogard PVI, Solutia; TBBS: N-tert-butyl-2-benzothiazyl sulphenamide, Vulkacit^{®} NZ/EGC, Lanxess; Vulcanizer: Sulphur, Redball Superfine, International Sulphur Inc. | |

The rubber mixture thus obtained was used to produce continuous elongated elements of green elastomeric material, used during the preparation of two tyres of size 245/40 R 20 99Y.

In particular, the following tyres were produced by means of a process as described above:
- a comparative tyre (Example 3) comprising a tread band having silica as preponderant reinforcing filler and incorporating a layer of comparative composition prepared according to example 1; and
- a tyre according to the invention (Example 4) comprising a tread band having silica as preponderant reinforcing filler and incorporating a layer of electrically conductive material prepared according to example 2.

The tyres thus obtained were then subjected to a series of standard tests in order to evaluate the electrical conductivity per unit volume and the rolling resistance thereof.

### A. Evaluation of the electrical conductivity per unit volume

The results of the tests carried out are given in the following Table 4, showing the values of electrical resistivity per unit volume of the two tyres determined in accordance with the experimental procedures described in the standard UNI 4288-72.

**Table 4**

| Example | 3(*) | 4(^) |
|---|---|---|
| Electrical resistivity of the tyre (Mohm) | 22,000 | 5 |

| | | |
|---|---|---|
| (*) comparative - (^) invention | | |

As can be seen from the values shown in the aforementioned Table, the tyre of the comparative Example 3 has a very high electrical resistivity per unit volume and therefore negligible and unacceptable conductivity for an antistatic tyre, whereas the tyre of Example 4 according to the invention has a very low resistivity value and therefore a conductivity well above the threshold necessary to be considered acceptable for use in an antistatic tyre.

### B. Evaluation of the rolling resistance

This evaluation was carried out on each tyre in accordance with standards ISO 8767 and in particular with the so-called "Torque Method" given in point 7.2.2 thereof, using laboratory apparatuses conventional *per se.*

The measurements were carried out at a constant speed equal to 80 km/h, while the parasitic losses were measured according to the "Skim Reading" method given in point 6.6.1 of the aforementioned standards ISO 8767.

The results of the tests carried out highlighted that the tyre of the invention (Example 4) shows a rolling resistance which is totally comparable to that measured in the tyre of the comparative Example 3.

From the data and from the experiences described above, it appears that the tyre according to the invention, comprising an electrically conductive layer comprising an electrically conductive material comprising at least one ultrafine, structured carbon black having specific features of BET surface area and of OAN absorption shows properties of conductivity that make it fully classifiable as an antistatic tyre.

Moreover, such a tyre has the same performance of similar tyres but not having suitable properties of electrical conductivity and, at the same time, does not have the technological and functional limitations encountered in antistatic tyres of the prior art, such as for example phenomena of irregular wear and/or of tread band tearing, poor mileage in safe and comfortable conditions while driving, as well as high production costs.

## Claims

1. Process for manufacturing a tyre (1) for vehicle wheels comprising a tread band (7) at a radially outer position with respect to an inner tyre component (2, 6) having at least one electrically conductive surface (6a), wherein the process comprises:
i) forming said inner component (2, 6) of the tyre (1) on at least one supporting element, so as to arrange said at least one electrically conductive surface (6a) at a radially outermost position with respect to the inner component (2, 6), the electrically conductive surface (6a) extending substantially for the entire circumferential development of said inner component (2, 6);
ii) forming at least a first portion (7b) of the tread band (7) at a radially outer position with respect to said at least one electrically conductive surface (6a), by depositing at least one continuous elongated element of green elastomeric material according to contiguous circumferential coils (10), wherein said first portion (7b) of the tread band (7) comprises at least one radially outer part defining a radially outer surface (7c) of the tread band (7) of the tyre (1) and has an exposed surface (7d) extending for at least an entire thickness of the tread band (7) between said electrically conductive surface (6a) and said radially outer surface (7c) of the tread band (7) for the entire circumferential development of the tread band (7);
iii) applying, on said substantially radially extending exposed surface (7d) an electrically conductive material comprising at least one carbon black having a BET surface area, measured in accordance with standard ASTM D 6556-16, of at least 300 m²/g and an OAN, Oil Absorption Number, absorption value, measured in accordance with standard ASTM D2414-16, equal to or greater than 200 ml oil/100 g carbon black so as to form an electrically conductive layer (7a) having a thickness, measured along a transversal cross section with respect to the rolling direction of the tyre (1), of 0.001 - 0.5 mm, and having a substantially radial extension at least equal to the thickness of the tread band (7);
iv) forming at least a second portion (7e) of the tread band (7) at a radially outer position with respect to said electrically conductive surface (6a), by depositing at least one continuous elongated element of green elastomeric material according to contiguous circumferential coils (10), at an axially contiguous position with respect to the electrically conductive layer (7a), so as to incorporate the same in the thickness of the tread band (7).

2. Process according to claim 1, wherein said electrically conductive material comprises at least one component selected from the group comprising: at least one vulcanisable polymer and at least one diluent.

3. Process according to claim 2, wherein said electrically conductive material comprises at least one vulcanisable polymer and at least one vulcanising agent.

4. Process according to any one of claims 1 to 3, wherein said electrically conductive material comprises per 100 phr of at least one vulcanisable polymer, between 50 and 2,000 phr of at least one diluent, between 1 and 15 phr of at least one vulcanising agent and an electroconductively effective amount of said carbon black.

5. Process according to claim 4, wherein said electroconductively effective amount of said carbon black is comprised between 1 and 200 phr.

6. Process according to any one of claims 1 to 5, wherein said electrically conductive material is applied on said substantially radially extending exposed surface (7d) in the form of a film.

7. Process according to any one of claims 1 to 6, wherein said step i) of forming said inner component (2, 6) comprises forming at least one carcass structure (2).

8. Process according to claim 7, wherein said step i) of forming said inner component (2, 6) comprises forming at least one belt structure (6) at a radially outer position with respect to said carcass structure (2).

9. Process according to any one of claims 7 or 8, wherein said step i) of forming said inner component (2, 6) comprises forming at least one layer of electroconductive vulcanisable elastomeric material at a radially outer position with respect to said carcass structure (2).

10. Tyre (1) for vehicle wheels comprising a tread band (7) at a radially outer position with respect to an inner component (2, 6) of the tyre (1) manufactured by the process according to any one of claims 1-9, wherein said tread band (7) incorporates an electrically conductive layer (7a) having a thickness, measured along a transversal cross section with respect to the rolling direction of said tyre (1), of 0.001 - 0.5 mm and having a substantially radial extension at least equal to the thickness of the tread band (7), said electrically conductive layer (7a) comprising an electrically conductive material comprising at least one carbon black having a BET surface area, measured in accordance with standard ASTM D 6556-16, of at least 300 m²/g and an OAN, Oil Absorption Number, absorption value, measured in accordance with standard ASTM D2414-16, equal to or greater than 200 ml oil/100 g carbon black.

11. Tyre (1) for vehicle wheels according to claim 10, wherein said electrically conductive material comprises at least one component selected from the group comprising: at least one vulcanisable polymer and at least one diluent.

12. Tyre (1) for vehicle wheels according to claim 11, wherein said electrically conductive material comprises at least one vulcanisable polymer and at least one vulcanising agent.

13. Tyre (1) for vehicle wheels according to any one of claims 11 or 12, wherein said electrically conductive material comprises per 100 phr of at least one vulcanisable polymer, between 50 and 2,000 phr of at least one diluent, between 1 and 15 phr of at least one vulcanising agent and an electroconductively effective amount of said carbon black, the electroconductively effective amount of said carbon black being preferably comprised between 1 and 200 phr.

14. Tyre (1) for vehicle wheels according to any one of claims 10 to 13, wherein said inner component (2, 6) comprises at least one carcass structure (2).

15. Tyre (1) for vehicle wheels according to claim 14, wherein said inner component (2, 6) comprises at least one belt structure (6) at a radially outer position with respect to said carcass structure (2).

16. Tyre (1) for vehicle wheels according to any one of claims 14 or 15, wherein said inner component (2, 6) comprises at least one layer of electroconductive vulcanisable elastomeric material at a radially outer position with respect to said carcass structure (2).

## Patentansprüche

1. Verfahren zur Herstellung eines Reifens (1) für Fahrzeugräder, der einen Laufflächenring (7) an einer radial äußeren Position in Bezug auf eine innere Reifenkomponente (2, 6) umfasst, die zumindest eine elektrisch leitfähige Oberfläche (6a) aufweist, wobei das Verfahren umfasst:
i) Bilden der inneren Komponente (2, 6) des Reifens (1) an zumindest einem Trägerelement, um die zumindest eine elektrisch leitfähige Oberfläche (6a) an einer radial äußersten Position in Bezug auf die innere Komponente (2, 6) anzuordnen, wobei die elektrisch leitfähige Oberfläche (6a) sich im Wesentlichen über die gesamte Umfangserstreckung der inneren Komponente (2, 6) erstreckt;
ii) Bilden zumindest eines ersten Abschnitts (7b) des Laufflächenrings (7) an einer radial äußeren Position in Bezug auf die zumindest eine elektrisch leitfähige Oberfläche (6a), durch Ablegen zumindest eines durchgehenden länglichen Elements aus rohem Elastomermaterial in Übereinstimmung mit aneinander anliegenden umlaufenden Wicklungen (10), wobei der erste Abschnitt (7b) des Laufflächenrings (7) zumindest einen radial äußeren Teil umfasst, der eine radial äußere Oberfläche (7c) des Laufflächenrings (7) des Reifens (1) definiert, und eine freiliegende Oberfläche (7d) aufweist, die sich über zumindest eine gesamte Dicke des Laufflächenrings (7) zwischen der elektrisch leitfähigen Oberfläche (6a) und der radial äußeren Oberfläche (7c) des Laufflächenrings (7) über die gesamte Umfangserstreckung des Laufflächenrings (7) erstreckt;
iii) Aufbringen, auf die sich im Wesentlichen radial erstreckende freiliegende Oberfläche (7d), eines elektrisch leitfähigen Materials umfassend zumindest einen Kohlenstoffruß mit einem BET-Oberflächenbereich, gemessen nach der Norm ASTM D 6556-16, von zumindest 300 m2/g, und einer OAN oder Ölabsorptionszahl oder einem Absorptionswert, gemessen nach der Norm ASTM D2414-16, gleich oder größer als 200 ml Öl/100 g Kohlenstoffruß, um eine elektrisch leitfähige Lage (7a) zu bilden, die eine Dicke, gemessen entlang eines transversalen Querschnitts in Bezug auf die Rollrichtung des Reifens (1), von 0,001 - 0,5 mm aufweist und eine im Wesentlichen radiale Erstreckung zumindest gleich der Dicke des Laufflächenrings (7) aufweist;
iv) Bilden zumindest eines zweiten Abschnitts (7e) des Laufflächenrings (7) an einer radial äußeren Position in Bezug auf die elektrisch leitfähige Oberfläche (6a), durch Ablegen zumindest eines durchgehenden länglichen Elements aus rohem Elastomermaterial in Übereinstimmung mit aneinander anliegenden umlaufenden Wicklungen (10), an einer axial angrenzenden Position in Bezug auf die elektrisch leitfähige Lage (7a), um dieselbe in die Dicke des Laufflächenrings (7) einzubeziehen.

2. Verfahren nach Anspruch 1, wobei das elektrisch leitfähige Material zumindest eine Komponente umfasst, die aus der Gruppe ausgewählt ist, die zumindest ein vulkanisierbares Polymer und zumindest ein Verdünnungsmittel umfasst.

3. Verfahren nach Anspruch 2, wobei das elektrisch leitfähige Material zumindest ein vulkanisierbares Polymer und zumindest ein Vulkanisationsmittel umfasst.

4. Verfahren nach einem der Ansprüche 1 bis 3, wobei das elektrisch leitfähige Material pro 100 phr zumindest eines vulkanisierbaren Polymers zwischen 50 und 2.000 phr zumindest eines Verdünnungsmittels, zwischen 1 und 15 phr zumindest eines Vulkanisationsmittels und eine für die elektrische Leitung wirksame Menge des Kohlenstoffrußes umfasst.

5. Verfahren nach Anspruch 4, wobei die für die elektrische Leitung wirksame Menge des Kohlenstoffrußes zwischen 1 und 200 phr beträgt.

6. Verfahren nach einem der Ansprüche 1 bis 5, wobei das elektrisch leitfähige Material auf die sich im Wesentlichen radial erstreckende freiliegende Oberfläche (7d) in der Form eines Films aufgebracht wird.

7. Verfahren nach einem der Ansprüche 1 bis 6, wobei der Schritt i) zur Bildung der inneren Komponente (2, 6) das Bilden zumindest einer Karkassenstruktur (2) umfasst.

8. Verfahren nach Anspruch 7, wobei der Schritt i) zur Bildung der inneren Komponente (2, 6) das Bilden zumindest einer Gürtelstruktur (6) an einer radial äußeren Position in Bezug auf die Karkassenstruktur (2) umfasst.

9. Verfahren nach einem der Ansprüche 7 oder 8, wobei der Schritt i) zur Bildung der inneren Komponente (2, 6) das Bilden zumindest einer Lage eines elektrisch leitfähigen vulkanisierbaren Elastomermaterials an einer radial äußeren Position in Bezug auf die Karkassenstruktur (2) umfasst.

10. Reifen (1) für Fahrzeugräder, umfassend einen Laufflächenring (7) an einer radial äußeren Position in Bezug auf eine innere Komponente (2, 6) des Reifens (1), hergestellt durch das Verfahren nach einem der Ansprüche 1-9, wobei der Laufflächenring (7) eine elektrisch leitfähige Lage (7a) einbezieht, die eine Dicke, gemessen entlang eines transversalen Querschnitts in Bezug auf die Rollrichtung des Reifens (1), von 0,001 - 0,5 mm aufweist und eine im Wesentlichen radiale Erstreckung zumindest gleich der Dicke des Laufflächenrings (7) aufweist, wobei die elektrisch leitfähige Lage (7a) ein elektrisch leitfähiges Material umfasst, das zumindest einen Kohlenstoffruß mit einem BET-Oberflächenbereich, gemessen nach der Norm ASTM D 6556-16, von zumindest 300 m2/g, und einer OAN oder Ölabsorptionszahl oder einem Absorptionswert, gemessen nach der Norm ASTM D2414-16, gleich oder größer als 200 ml Öl/100 g Kohlenstoffruß umfasst.

11. Reifen (1) für Fahrzeugräder nach Anspruch 10, wobei das elektrisch leitfähige Material zumindest eine Komponente umfasst, die aus der Gruppe ausgewählt ist, die zumindest ein vulkanisierbares Polymer und zumindest ein Verdünnungsmittel umfasst.

12. Reifen (1) für Fahrzeugräder nach Anspruch 11, wobei das elektrisch leitfähige Material zumindest ein vulkanisierbares Polymer und zumindest ein Vulkanisationsmittel umfasst.

13. Reifen (1) für Fahrzeugräder nach einem der Ansprüche 11 oder 12, wobei das elektrisch leitfähige Material pro 100 phr zumindest eines vulkanisierbaren Polymers zwischen 50 und 2.000 phr zumindest eines Verdünnungsmittels, zwischen 1 und 15 phr zumindest eines Vulkanisationsmittels und eine für die elektrische Leitung wirksame Menge des Kohlenstoffrußes umfasst, wobei die für die elektrische Leitung wirksame Menge des Kohlenstoffrußes vorzugsweise zwischen 1 und 200 phr beträgt.

14. Reifen (1) für Fahrzeugräder nach einem der Ansprüche 10 bis 13, wobei die innere Komponente (2, 6) zumindest eine Karkassenstruktur (2) umfasst.

15. Reifen (1) für Fahrzeugräder nach Anspruch 14, wobei die innere Komponente (2, 6) zumindest eine Gürtelstruktur (6) an einer radial äußeren Position in Bezug auf die Karkassenstruktur (2) umfasst.

16. Reifen (1) für Fahrzeugräder nach einem der Ansprüche 14 oder 15, wobei die innere Komponente (2, 6) zumindest eine Lage eines elektrisch leitfähigen vulkanisierbaren Elastomermaterials an einer radial äußeren Position in Bezug auf die Karkassenstruktur (2) umfasst.

## Revendications

1. Procédé de fabrication d'un pneu (1) pour roues de véhicule comprenant une bande de roulement (7) à une position radialement externe par rapport à un composant de pneu interne (2, 6) ayant au moins une surface électriquement conductrice (6a), dans lequel le processus comprend :
i) la formation dudit composant interne (2, 6) du pneu (1) sur au moins un élément de support, de manière à agencer ladite au moins une surface électriquement conductrice (6a) à une position radialement la plus externe par rapport au composant interne (2, 6), la surface électriquement conductrice (6a) s'étendant essentiellement sur tout le développement circonférentiel dudit composant interne (2, 6) ;
ii) la formation d'au moins une première partie (7b) de la bande de roulement (7) à une position radialement externe par rapport à ladite au moins une surface électriquement conductrice (6a), en déposant au moins un élément allongé continu en matériau élastomère cru selon des bobines circonférentielles contiguës (10), où ladite première partie (7b) de la bande de roulement (7) comprend au moins une partie radialement externe définissant une surface radialement externe (7c) de la bande de roulement (7) du pneu (1) et a une surface exposée (7d) s'étendant sur au moins toute l'épaisseur entière de la bande de roulement (7) entre ladite surface électriquement conductrice (6a) et ladite surface radialement externe (7c) de la bande de roulement (7) sur tout le développement circonférentiel de la bande de roulement (7) ;
iii) l'application, sur ladite surface exposée s'étendant essentiellement radialement (7d), d'un matériau électriquement conducteur comprenant au moins un noir de carbone ayant une surface BET, mesurée selon la norme ASTM D6556-16, d'au moins 300 m²/g et une valeur d'absorption, Indice d'Absorption d'Huile, OAN, mesurée selon la norme ASTM D2414-16, supérieure ou égale à 200 ml d'huile/100 g de noir de carbone de manière à former une couche électriquement conductrice (7a) ayant une épaisseur, mesurée le long d'une section transversale par rapport à la direction de roulement du pneu (1), comprise entre 0,001 et 0,5 mm, et ayant une extension essentiellement radiale au moins égale à l'épaisseur de la bande de roulement (7) ;
iv) la formation d'au moins une deuxième partie (7e) de la bande de roulement (7) à une position radialement externe par rapport à ladite surface électriquement conductrice (6a), en déposant au moins un élément allongé continu en matériau élastomère cru selon des bobines circonférentielles contiguës (10), à une position axialement contiguë par rapport à la couche électriquement conductrice (7a), de manière à incorporer cette dernière dans l'épaisseur de la bande de roulement (7).

2. Procédé selon la revendication 1, dans lequel ledit matériau électriquement conducteur comprend au moins un composant choisi dans le groupe comprenant : au moins un polymère vulcanisable et au moins un diluant.

3. Procédé selon la revendication 2, dans lequel ledit matériau électriquement conducteur comprend au moins un polymère vulcanisable et au moins un agent de vulcanisation.

4. Procédé selon l'une quelconque des revendications 1 à 3, dans lequel ledit matériau électriquement conducteur comprend pour 100 phr d'au moins un polymère vulcanisable, entre 50 et 2000 phr d'au moins un diluant, entre 1 et 15 phr d'au moins un agent de vulcanisation et une quantité efficace de façon électroconductrice dudit noir de carbone.

5. Procédé selon la revendication 4, dans lequel ladite quantité efficace de façon électroconductrice dudit noir de carbone est comprise entre 1 et 200 phr.

6. Procédé selon l'une quelconque des revendications 1 à 5, dans lequel ledit matériau électriquement conducteur est appliqué sur ladite surface exposée s'étendant essentiellement radialement (7d) sous forme d'un film.

7. Procédé selon l'une quelconque des revendications 1 à 6, dans lequel ladite étape i) de formation dudit composant interne (2, 6) comprend la formation d'au moins une structure de carcasse (2).

8. Procédé selon la revendication 7, dans lequel ladite étape i) de formation dudit composant interne (2, 6) comprend la formation d'au moins une structure de ceinture (6) à une position radialement externe par rapport à ladite structure de carcasse (2).

9. Procédé selon l'une quelconque des revendications 7 ou 8, dans lequel ladite étape i) de formation dudit composant interne (2, 6) comprend la formation d'au moins une couche de matériau élastomère vulcanisable électroconducteur à une position radialement externe par rapport à ladite structure de carcasse (2).

10. Pneu (1) pour roues de véhicule comprenant une bande de roulement (7) à une position radialement externe par rapport à un composant interne (2, 6) du pneu (1) fabriqué par le procédé selon l'une quelconque des revendications 1 à 9, dans lequel ladite bande de roulement (7) incorpore une couche électriquement conductrice (7a) ayant une épaisseur, mesurée le long d'une section transversale par rapport à la direction de roulement dudit pneu (1), comprise entre 0,001 et 0,5 mm et ayant une extension essentiellement radiale au moins égale à l'épaisseur de la bande de roulement (7), ladite couche électriquement conductrice (7a) comprenant un matériau électriquement conducteur comprenant au moins un noir de carbone ayant une surface BET, mesurée selon la norme ASTM D6556-16, d'au moins 300 m²/g et une valeur d'absorption, Indice d'Absorption d'Huile, OAN, mesurée selon la norme ASTM D2414-16, supérieure ou égale à 200 ml d'huile/100 g de noir de carbone.

11. Pneu (1) pour roues de véhicule selon la revendication 10, dans lequel ledit matériau électriquement conducteur comprend au moins un composant choisi dans le groupe comprenant : au moins un polymère vulcanisable et au moins un diluant.

12. Pneu (1) pour roues de véhicule selon la revendication 11, dans lequel ledit matériau électriquement conducteur comprend au moins un polymère vulcanisable et au moins un agent de vulcanisation.

13. Pneu (1) pour roues de véhicule selon l'une quelconque des revendications 11 ou 12, dans lequel ledit matériau électriquement conducteur comprend pour 100 phr d'au moins un polymère vulcanisable, entre 50 et 2000 phr d'au moins un diluant, entre 1 et 15 phr d'au moins un agent de vulcanisation et une quantité efficace de façon électroconductrice dudit noir de carbone, la quantité efficace de façon électroconductrice dudit noir de carbone étant de préférence comprise entre 1 et 200 phr.

14. Pneu (1) pour roues de véhicule selon l'une quelconque des revendications 10 à 13, dans lequel ledit composant interne (2, 6) comprend au moins une structure de carcasse (2).

15. Pneu (1) pour roues de véhicule selon la revendication 14, dans lequel ledit composant interne (2, 6) comprend au moins une structure de ceinture (6) à une position radialement externe par rapport à ladite structure de carcasse (2).

16. Pneu (1) pour roues de véhicule selon l'une quelconque des revendications 14 ou 15, dans lequel ledit composant interne (2, 6) comprend au moins une couche de matériau élastomère vulcanisable électroconducteur à une position radialement externe par rapport à ladite structure de carcasse (2).
